# EUROPEAN PATENT APPLICATION

(11) **EP 4 848 849 A1**
(43) Date of publication of application: **02.12.2026**
(21) Application number: 25747507.9
(22) Date of filing: 13.01.2025
(51) Int. Cl.: H04W 64/00

(54) **POSITIONING METHOD AND APPARATUS, PASSIVE INTERNET OF THINGS TERMINAL, BASE STATION, SYSTEM AND MEDIUM**

(30) Priority: 31.01.2024 CN 202410138562
(71) Applicant: Datang Mobile Communications Equipment Co., Ltd., Beijing 100085 (CN)
(72) Inventor: LI, Jianxiang, Beijing 100085 (CN); JIA, Yinan, Beijing 100085 (CN); WANG, Lei, Beijing 100085 (CN); LIANG, Jing, Beijing 100085 (CN)
(74) Representative: Ipsilon
(86) International application number: PCT/CN2025/072048
(87) International publication number: WO 2025/161931

(57) **Abstract**

The present application relates to a positioning method and apparatus, a passive Internet of Things terminal, a base station, a system and a medium. The method comprises: a passive Internet of Things terminal receives an excitation signal sent by a base station; and on the basis of the excitation signal, the passive Internet of Things terminal sends a reflected signal to the base station, the reflected signal being used for determining the location of the passive Internet of Things terminal.

## Description

### CROSS-REFERENCE

This application claims priority to Chinese Patent Application No. 2024101385626, entitled "Positioning Method and Apparatus, Ambient Internet of Things Device, Base Station, System and Medium", filed on January 31, 2024, which is incorporated herein by reference in its entirety.

### TECHNICAL FIELD

The present application relates to the field of Internet of Things technologies, and in particular, to a positioning method and apparatus, an ambient Internet of Things device, a base station, a system, and a medium.

### BACKGROUND

Current mobile terminals have high power consumption and high cost, and a maintenance cost brought by batteries of the mobile terminals is also high. In view of this, ambient Internet of Things (AIoT) devices have emerged. The AIoT devices can work without batteries, so that the power consumption and cost of the AIoT devices can be reduced, and the maintenance cost can also be reduced greatly.

In practical application processes, a location of the AIoT device generally needs to be learnt accurately, and therefore, there is an urgent need to provide a positioning solution for the AIoT device.

### SUMMARY

In a first aspect, an embodiment of the present application provides a positioning method. The positioning method is applied in an ambient Internet of Things (AIoT) device, and includes:
receiving an excitation signal sent by a base station; and
sending a reflected signal to the base station based on the excitation signal, the reflected signal being configured for determining a location of the AIoT device.

In an embodiment, receiving the excitation signal sent by the base station includes:
receiving a wake-up signal sent by the base station, the wake-up signal being configured for waking up the AIoT device; and
receiving, in a case that the AIoT device accesses the base station, a positioning signal sent by the base station for indicating positioning.

In an embodiment, the method further includes:
after the wake-up signal is received, controlling the AIoT device to be in an active state according to the wake-up signal.

In an embodiment, the excitation signal carries a first identifier, and sending the reflected signal to the base station based on the excitation signal includes:
in a case that that the first identifier indicates the AIoT device and/or the first identifier indicates a AIoT device group to which the AIoT device belongs, sending the reflected signal to the base station according to the excitation signal.

In an embodiment, the method further includes:
receiving a sleep instruction sent by the base station; and
controlling the AIoT device to get into a sleep state according to the sleep instruction.

In an embodiment, receiving the excitation signal sent by the base station includes:
receiving the excitation signal sent by the base station in a broadcast or in a point-to-point manner.

In a second aspect, an embodiment of the present application provides a positioning method. The positioning method is applied in a base station, and includes:
sending an excitation signal;
receiving a reflected signal reflected by an AIoT device; and
determining a location of the AIoT device according to the reflected signal.

In an embodiment, the excitation signal carries a first identifier, and the first identifier is configured to instruct the AIoT device indicated by the first identifier and/or at least one AIoT device in a AIoT device group indicated by the first identifier to reflect the reflected signal.

In an embodiment, determining the location of the AIoT device according to the reflected signal includes:
determining whether the AIoT device sending the reflected signal is an AIoT device needing positioning according to an identifier carried by the reflected signal; and
in a case that the AIoT device sending the reflected signal is the AIoT device needing positioning, determining the location of the AIoT device according to the reflected signal.

In an embodiment, determining whether the AIoT device sending the reflected signal is the AIoT device needing positioning includes:
in a case that the identifier carried by the reflected signal and the first identifier indicate the same AIoT device and/or the same AIoT device group, determining that the AIoT device sending the reflected signal is the AIoT device needing positioning.

In an embodiment, before sending the excitation signal, the method further includes:
receiving a positioning service request sent by a core network device, the positioning service request carrying the first identifier.

In an embodiment, determining the location of the AIoT device according to the reflected signal includes:
determining a first distance between the AIoT device and the base station according to the reflected signal; and
sending the first distance to the core network device, the first distance being configured for the core network device to determine the location of the AIoT device.

In an embodiment, the method further includes:
sending resource configuration information for sending the excitation signal and the first identifier to at least one neighboring base station;
where the neighboring base station receives the reflected signal based on the resource configuration information and the first identifier.

In an embodiment, determining the location of the AIoT device according to the reflected signal includes:
determining a first distance between the AIoT device and the base station according to the reflected signal;
receiving a second distance between each neighboring base station and the AIoT device sent by each neighboring base station, the second distance being determined by the neighboring base station according to the reflected signal; and
determining the location of the AIoT device according to the first distance and the second distances.

In an embodiment, the method further includes:
receiving a positioning process ending indication sent by the core network device; and
sending a sleep instruction to the AIoT device according to the positioning process ending indication.

In a third aspect, an embodiment of the present application provides a positioning apparatus. The positioning apparatus is applied in an AIoT device, and includes:
a receiving module configured to receive an excitation signal sent by a base station; and
a sending module configured to, send a reflected signal to the base station based on the excitation signal, the reflected signal being configured for determining a location of the AIoT device.

In a fourth aspect, an embodiment of the present application provides a positioning apparatus. The positioning apparatus is applied in a base station, and includes:
a sending module configured to send an excitation signal;
a receiving module configured to receive a reflected signal reflected by an AIoT device; and
a processing module configured to determine a location of the AIoT device according to the reflected signal.

In a fifth aspect, an embodiment of the present application provides an ambient Internet of Things (AIoT) device. The AIoT device includes a memory, a transceiver, and a processor:
the memory is configured for storing a computer program; the transceiver is configured for transmitting and receiving data under control of the processor; and the processor is configured for reading the computer program in the memory and performing the following operations:
controlling the transceiver to receive an excitation signal sent by a base station; and
controlling the transceiver to, send a reflected signal to the base station based on the excitation signal, the reflected signal being configured for determining a location of the AIoT device.

In an embodiment, the processor is configured to read the computer program in the memory and perform the following operations:
controlling the transceiver to receive a wake-up signal sent by the base station, the wake-up signal being configured for waking up the AIoT device; and
controlling the transceiver to receive, under the condition of accessing the base station, a positioning signal sent by the base station for indicating positioning.

In an embodiment, the processor is configured to read the computer program in the memory and further perform the following operation:
after the wake-up signal is received, controlling the AIoT device to be in an active state according to the wake-up signal.

In an embodiment, the processor is configured to read the computer program in the memory and perform the following operation:
controlling the transceiver to, in a case that the first identifier indicates the AIoT device and/or the first identifier indicates an AIoT device group to which the AIoT device belongs, send the reflected signal to the base station according to the excitation signal.

In an embodiment, the processor is configured to read the computer program in the memory and further perform the following operations:
controlling the transceiver to receive a sleep instruction sent by the base station; and
controlling the AIoT device to get into a sleep state according to the sleep instruction.

In an embodiment, the processor is configured to read the computer program in the memory and perform the following operation:
controlling the transceiver to receive the excitation signal broadcast by the base station or sent by the base station in a point-to-point manner.

In a sixth aspect, an embodiment of the present application provides a base station. The base station includes a memory, a transceiver, and a processor:
the memory is configured for storing a computer program; the transceiver is configured for transmitting and receiving data under control of the processor; and the processor is configured for reading the computer program in the memory and performing the following operations:
controlling the transceiver to send an excitation signal;
controlling the transceiver to receive a reflected signal reflected by an AIoT device; and
determining a location of the AIoT device according to the reflected signal.

In an embodiment, the excitation signal carries a first identifier, and the first identifier is configured to instruct the AIoT device indicated by the first identifier and/or at least one AIoT device in a AIoT device group indicated by the first identifier to reflect the reflected signal.

In an embodiment, the processor is configured to read the computer program in the memory and perform the following operations:
determining whether the AIoT device sending the reflected signal is an AIoT device needing positioning according to an identifier carried by the reflected signal; and
in a case that the AIoT device sending the reflected signal is the AIoT device needing positioning, determining the location of the AIoT device according to the reflected signal.

In an embodiment, the processor is configured to read the computer program in the memory and perform the following operation:
in a case that the identifier carried by the reflected signal and the first identifier indicate the same AIoT device and/or the same AIoT device group, determining that the AIoT device sending the reflected signal is the AIoT device needing positioning.

In an embodiment, the processor is configured to read the computer program in the memory and further perform the following operation:
controlling the transceiver to receive a positioning service request sent by a core network device, the positioning service request carrying the first identifier.

In an embodiment, the processor is configured to read the computer program in the memory and perform the following operations:
determining a first distance between the AIoT device and the base station according to the reflected signal;
controlling the transceiver to send the first distance to the core network device, the first distance being configured for the core network device to determine the location of the AIoT device.

In an embodiment, the processor is configured to read the computer program in the memory and further perform the following operation:
controlling the transceiver to send resource configuration information for sending the excitation signal and the first identifier to at least one neighboring base station;
where the neighboring base station receives the reflected signal based on the resource configuration information and the first identifier.

In an embodiment, the processor is configured to read the computer program in the memory and perform the following operations:
determining a first distance between the AIoT device and the base station according to the reflected signal;
controlling the transceiver to receive a second distance between each neighboring base station and the AIoT device sent by each neighboring base station, the second distance being determined by the neighboring base station according to the reflected signal; and
determining the location of the AIoT device according to the first distance and the second distances.

In an embodiment, the processor is configured to read the computer program in the memory and further perform the following operations:
controlling the transceiver to receive a positioning process ending indication sent by the core network device; and
controlling the transceiver to send a sleep instruction to the AIoT device according to the positioning process ending indication.

In a seventh aspect, an embodiment of the present application provides a positioning system. The positioning system includes an ambient Internet of Things (AIoT) device, a base station and a core network device;
the AIoT device is configured to perform the steps of the method in the first aspect;
the base station is configured to perform the steps of the method in the second aspect.

In an eighth aspect, an embodiment of the present application provides a computer-readable storage medium. The computer-readable storage medium has a computer program stored thereon, the computer program, when executed by a processor, implementing the steps of the method in the above first aspect and/or second aspect.

In a ninth aspect, an embodiment of the present application provides a computer program product. The computer program product includes a computer program which, when executed by a processor, implements the steps of the method in the above first aspect and/or second aspect.

In a tenth aspect, an embodiment of the present application provides a chip. The chip includes a programmable logic circuit and/or program instructions, when running, the chip implementing the steps of the method in the above first aspect and/or second aspect.

In the positioning method and apparatus, the AIoT device, the base station, the system and the medium, the AIoT device receives the excitation signal sent by the base station, the AIoT device then sends the reflected signal to the base station according to the excitation signal, and the base station can determine the location of the AIoT device according to the reflected signal. For example, the base station measures the reflected signal, and can determine the location of the AIoT device according to strength of the reflected signal, a received beam or the like, so that positioning of the AIoT device is realized.

The above description is only an overview of the technical solution of the present application. In order to better understand the technical means of the present application, it can be implemented in accordance with the contents of the specification, and in order to make the above and other objects, features, and advantages of the present application more clearly understand, the specific implementation of the present application is listed below.

### BRIEF DESCRIPTION OF THE DRAWINGS

Various other advantages and merits will become apparent to those skilled in the art by reading through the following detailed description of embodiments. The drawings are only intended to illustrate embodiments and not construed as limiting the present application. Moreover, in all the drawing, like reference numerals denote like components. In the drawings:

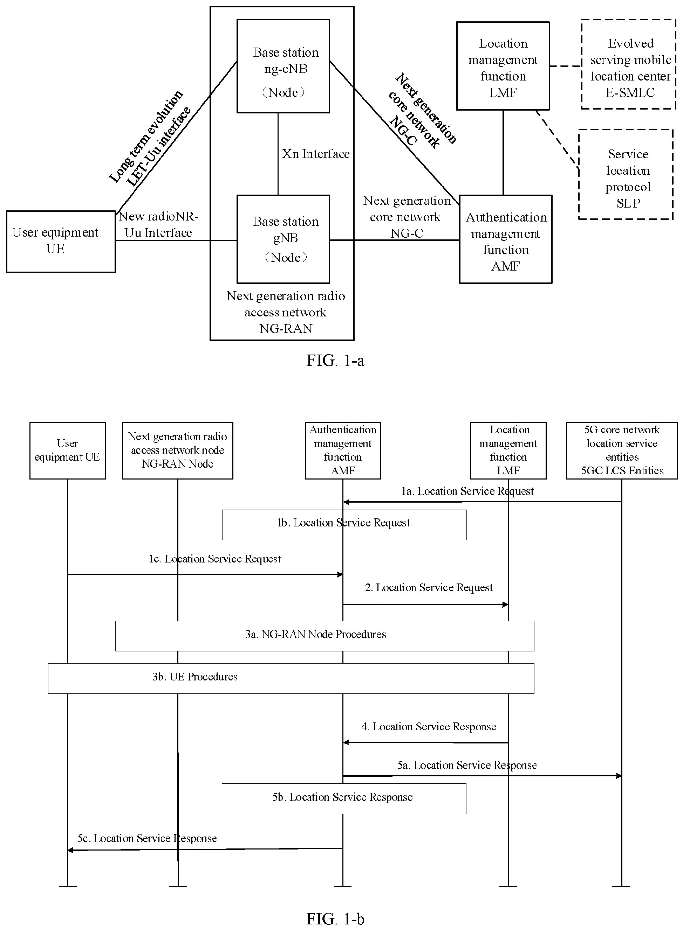

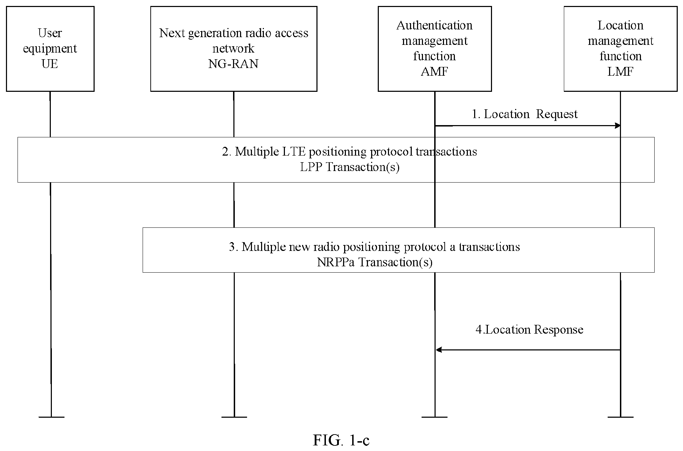

FIG. 1-a is an architecture diagram of a positioning system for positioning a mobile terminal in the related art;
FIG. 1-b is a schematic flow diagram of LCS positioning in the related art;
FIG. 1-c is a schematic flow diagram of NI-LR or MT-LR positioning in the related art;
FIG. 2 is a schematic diagram of an implementation environment of a positioning method according to an embodiment of the present application;
FIG. 3 is a schematic flow diagram of a positioning method according to an embodiment of the present application;
FIG. 4 is a schematic flow diagram of another positioning method according to an embodiment of the present application;
FIG. 5 is a schematic flow diagram of another positioning method according to an embodiment of the present application;
FIG. 6 is a schematic flow diagram of another positioning method according to an embodiment of the present application;
FIG. 7 is a schematic flow diagram of another positioning method according to an embodiment of the present application;
FIG. 8 is a schematic flow diagram of another positioning method according to an embodiment of the present application;
FIG. 9 is a schematic flow diagram of another positioning method according to an embodiment of the present application;
FIG. 10 is a schematic flow diagram of another positioning method according to an embodiment of the present application;
FIG. 11 is a structural block diagram of a positioning apparatus according to an embodiment of the present application;
FIG. 12 is a structural block diagram of another positioning apparatus according to an embodiment of the present application;
FIG. 13 is a structural block diagram of another positioning apparatus according to an embodiment of the present application;
FIG. 14 is a schematic structural diagram of an AIoT device according to an embodiment of the present application;
FIG. 15 is a schematic structural diagram of a base station or a core network device according to an embodiment of the present application; and
FIG. 16 is a schematic structural diagram of a chip according to an embodiment.

### DETAILED DESCRIPTION

The embodiments of the technical solutions of the present application will be described in detail below with reference to the accompanying drawings. The following embodiments are only used to illustrate the technical solutions of the present application more clearly, and are therefore only used as examples, and cannot be used to limit the protection scope of the present application.

Unless defined otherwise, all technical and scientific terms used herein have the same meaning as commonly understood by one of ordinary skill in the art to which this application belongs; the terminology used herein is for the purpose of describing particular embodiments only and is not intended to be limiting of the application; the terms "including", "having" and any variations thereof in the description and claims of the present application and in the preceding description of the drawings are intended to cover a non-exclusive inclusion.

In the description of the embodiments of the present application, the technical terms such as "first", "second", or the like, are only used for distinguishing different objects, and are not intended to indicate or imply relative importance or significance or to imply the number, specific sequence or primary and secondary relationship of indicated technical features. In the description of the embodiments of the present application, "multiple" means two or more, unless otherwise clearly and specifically limited.

Reference herein to "embodiment" means that a particular feature, structure, or characteristic described in connection with the embodiment may be included in at least one embodiment of the present application. The appearances of this phrase in various places in the specification are not necessarily all referring to the same embodiment, nor referring to separate or alternative embodiments mutually exclusive of other embodiments. It is explicitly and implicitly understood by those skilled in the art that the embodiments described herein can be combined with other embodiments.

In the description of the embodiments of the present application, the term "and/or" herein only describes an association relationship between associated objects, and indicates that three relationships may exist. For example, A and/or B may indicate three cases: only A exists; both A and B exist; and only B exists. In addition, the character "/" herein generally indicates an "or" relationship between the associated objects.

In the description of the embodiments of the present application, the term "a plurality of" means more than two (including two). Similarly, "a plurality of groups" means more than two groups (including two groups), and "a plurality of sheets" means more than two sheets (including two sheets).

In descriptions of the embodiments of the present application, directions or positional relationships indicated by technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential", etc., are based on orientations or positional relationships shown in the accompanying drawings, and they are used only for describing the embodiments of the present application and for description simplicity, but do not indicate or imply that an indicated apparatus or element must have a specific orientation or be constructed and operated in a specific orientation. Therefore, it cannot be understood as a limitation on the embodiments of the present application.

In the description of the embodiments of the present application, unless otherwise explicitly specified and defined, the technical terms "mounting", "coupling", "connecting", "fixing", etc., should be understood in a broad sense, such as a fixed connection, a detachable connection, or an integral connection; it may also be a mechanical connection or an electrical connection; and it may also be a direct connection, an indirect connection through an intermediate medium, an internal connection of two elements, or an interaction of two elements. For those of ordinary skill in the art, the specific meanings of the above terms in the embodiments of the present application can be understood on case-by-case.

A cellular network is a wireless communication network and is named because of a physical structure thereof, which is similar to a cellular shape.

The cellular network is composed of a plurality of small regions, each region has a base station, and the base stations can be connected to the Internet or other network centers in a wired or wireless manner to form a complete communication network. A mobile terminal obtains a wireless communication service by communicating with the base station.

A location of the mobile terminal is important data during the communication process of the mobile terminal. Next, a positioning manner for the mobile terminal in the related art is briefly described.

Referring to FIG. 1-a, FIG. 1-a is an architecture view of a positioning system for positioning the mobile terminal. As shown in FIG. 1:

User equipment (UE) is connected to a Next Generation Node B (gNB) in a Next Generation (NG)-Radio Access Network (RAN) through a New Radio (NR)-Uu interface, the UE is connected to an ng-eNB (the ng-eNB is configured to be docked with a 5G core network, and is an upgraded 4G base station) through a Long Term Evolution (LTE)-Uu interface, and the gNB and the ng-eNB may communicate through an Xn interface.

The gNB and the ng-eNB are connected to an Authentication Management Function (AMF) in a Next Generation Core (NG-C), and the AMF is connected to a Location Management Function (LMF).

Herein, the LMF is a positioning server, is responsible for selecting a positioning method and triggering corresponding positioning measurement, and can calculate a final positioning result and precision. The LMF is respectively connected to a traditional Evolved Serving Mobile Location Center (E-SMLC) and a Service Location Protocol (SLP).

The gNB in the NG-RAN and the ng-eNB may send a positioning reference signal or perform positioning measurement based on auxiliary information.

The UE may send the positioning reference signal, or perform positioning measurement based on the auxiliary information, or calculate the final positioning result and precision based on a measurement result.

In the following, based on the positioning architecture shown in FIG. 1-a, the positioning process of the mobile terminal is described by two positioning service processes.

### 1) Location Service (LCS) positioning service process

Referring to FIG. 1-b, FIG. 1-b is a schematic diagram of the LCS positioning process. In FIG. 1-b, referring to step 1a, step 1b and step 1c, a location service request from 5GC LCS entities/AMF/UE arrives at the AMF, and then, referring to step 2, the location service request is transmit to the LMF through the AMF, thereby initiating an LMF positioning service.

The LMF finally obtains location information of the UE through NG-RAN node procedures shown in step 3a and UE procedures shown in step 3b in FIG. 1-b, and the LMF transmits the location information of the UE, or the like, to the AMF through a location service response shown in step 4.

The AMF performs the location service response through step 5a/step 5b/step 5c shown in FIG. 1-b, and transmits the location information of the UE to the 5GC LCS entities/AMF/UE.

### 2) Network Induced Location Request (NI-LR) or Mobile Terminated Location Request (MT-LR) positioning service process

Referring to FIG. 1-c, FIG. 1-c is a schematic diagram of the NI-LR or MT-LR positioning process. In FIG. 1-c, starting from initiating the positioning service by the AMF in the LMF, the process includes following steps.

Step 1: the AMF transmits a location request to the LMF, the location request including Quality of Service (QoS) associated with the UE, a scheduled positioning time, and a UE LTE Positioning Protocol (LPP) positioning capability (if available).

Step 2: the LMF obtains location related information from the UE and/or the NG-RAN through an LPP transaction.

The LMF may initiate one or more LPP procedures to transmit the UE positioning capability, provide auxiliary data for the UE, and/or obtain the location information from the UE. The UE may initiate one or more LPP procedures (e.g., to request the auxiliary data from the LMF) after receiving a first LPP message sent by the LMF.

If the scheduled positioning time is provided in the step 1, the LMF may schedule the UE to perform location measurement at or near the scheduled positioning time. If the LMF obtains the UE positioning capability from the AMF in the step 1, the LPP procedure transmitting the UE positioning capability may be omitted.

Step 3: if the LMF needs the UE location related information from the NG-RAN, the LMF initiates one or more NR positioning protocol A (NRPPA) transactions.

An execution order of the step 3 and the step 2 is not limited, and the LMF and the NG-RAN can determine the procedures required to be performed by the positioning service. For example, the step 3 may be performed before the step 2 or simultaneously with the step 2.

If the scheduled positioning time is provided in the step 1, the LMF may schedule the NG-RAN to perform positioning measurement at or near a predetermined positioning time.

Step 4: the LMF performs a location response and returns the location response to the AMF.

Any location estimate obtained from results of the step 2 and the step 3 is included in the location response.

The LMF may also return an LPP UE capability.

In the above positioning manners based on the cellular network, the positioning service is performed for the mobile terminal with a communication capability, and the mobile terminal needs to have a strong communication capability to realize processes of network paging, positioning measurement, calculating of the final positioning result and precision based on the measurement result, or the like.

However, the current mobile terminals have high power consumption and manufacturing cost, a maintenance cost of the batteries of the mobile terminals is also high, and therefore, ambient Internet of Things (AIoT) devices have emerged. The AIoT devices can work without batteries, so that the power consumption and manufacturing cost of the terminals can be reduced, the maintenance cost can also be reduced greatly, and green environmental protection of an Internet of Things network is further realized.

In practical application processes, the location of the AIoT device generally needs to be learnt accurately. However, due to a limitation of a capability of the AIoT device and other factors, the positioning manner of the mobile terminal in the related art is not suitable for positioning the AIoT device. Therefore, there is an urgent need to provide a positioning solution for the AIoT device.

Hereinafter, implementation processes of embodiments of the present application are exemplarily described in conjunction with an implementation environment to which a positioning method according to the embodiments of the present application is applied.

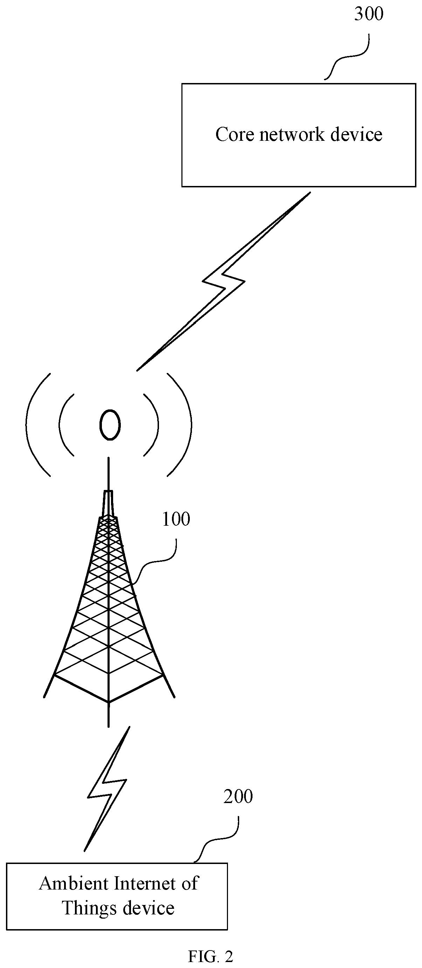

The embodiments of the present application provide a positioning method which can realize the positioning of the AIoT device under coverage of the cellular network. FIG. 2 is a schematic diagram of the implementation environment of the positioning method according to the embodiments of the present application.

As shown in FIG. 2, at least one AIoT device 200 (FIG. 2 only shows one AIoT device 200 exemplarily) is deployed in a coverage region of a base station 100, and the base station 100 can communicate with the AIoT device 200 in the coverage region of the base station 100.

The base station 100 is further connected to a core network device 300 via a network. The core network device 300 may be a network function related to a positioning service, for example, an LMF.

The technical solution of the present application and a way to solve the above technical problem by the technical solution of the present application are described in detail below by specific embodiments with reference to the accompanying drawings. The several specific embodiments may be combined with each other, and same or similar concepts or processes may not be repeated in some embodiments.

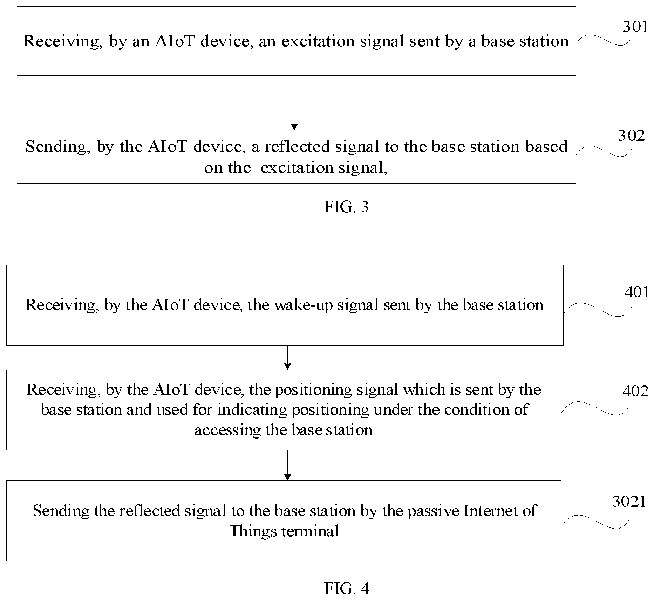

In an embodiment, as shown in FIG. 3, a positioning method is provided, the description is given with the method applied to the AIoT device 200 in FIG. 2 as an example, and the method includes the following steps.

Step 301: receiving, by the AIoT device, an excitation signal sent by a base station.

Under the condition that the AIoT device and/or a AIoT device group (at least one AIoT device may be included in the AIoT device group) needs to be positioned, the base station obtains a positioning service request, the positioning service request indicates that the AIoT device and/or the AIoT device group needs to be positioned, and the base station sends the excitation signal according to the positioning service request.

In a possible implementation, the positioning service request carries a first identifier, and the first identifier indicates a certain AIoT device and/or AIoT device group, that is, the positioning service request indicates that the AIoT device and/or the AIoT device group needs to be positioned.

In some embodiments, the first identifier is an identifier of a certain AIoT device, and in this case, the positioning service request indicates that the AIoT device needs to be positioned. In some embodiments, the first identifier is an identifier of a certain AIoT device group, and in this case, the positioning service request indicates that the AIoT device group needs to be positioned, and the AIoT device group may include one or more AIoT devices, that is, the positioning service request indicates that at least one AIoT device in the AIoT device group is positioned. In some embodiments, the first identifier includes an identifier of a certain AIoT device, and the first identifier includes an identifier of a certain AIoT device group, and in this case, the positioning service request indicates that the AIoT device and the AIoT device group need to be positioned.

In this way, the excitation signal sent by the base station according to the positioning service request also carries the first identifier, and the first identifier indicates a certain AIoT device and/or one AIoT device group. Through the first identifier, the excitation signal can instruct the AIoT device and/or the AIoT device in the AIoT device group indicated by the first identifier to reflect a reflected signal, while the AIoT device and the AIoT device group which are not indicated by the first identifier do not need to reflect the reflected signal.

In other possible implementations, the excitation signal may not indicate any AIoT device, and the excitation signal does not indicate any AIoT device group. For example, the excitation signal does not carry the first identifier, so that the positioning service request does not define the specific AIoT device and/or AIoT device group, and all the AIoT devices and/or AIoT device groups within the coverage range of the base station can be positioned.

Hereinafter, an exemplary manner of obtaining the positioning service request by the base station is described.

In a possible implementation, the positioning service request may be sent by a core network to the base station. Exemplarily, when a user needs to position a certain AIoT device and/or AIoT device group, the user uses a client to send the positioning service request, and the positioning service request finally reaches a core network device.

Then, the core network device may determine, according to the first identifier, a base station storing the first identifier. The base station stores the first identifier, which means that the base station can communicate with the AIoT device and/or the AIoT device group indicated by the first identifier, that is, an object needing to be positioned may be in the coverage range of the base station, and the core network device sends the positioning service request to the base station.

In some embodiments, the core network device may determine, according to the first identifier, a base station that stores the first identifier most recently, i.e., a base station that communicates with the AIoT device and/or the AIoT device group indicated by the first identifier most recently, and the core network device sends the positioning service request to the base station. In some embodiments, the core network device may further determine a plurality of base stations storing the first identifier within a preset time period, and the core network device sends the positioning service request to each of the base stations.

In another possible implementation, the positioning service request may also be generated by the base station, or the positioning service request is sent to the base station by the user through a mobile terminal, and the manner of obtaining the positioning service request by the base station is not limited herein.

After obtaining the positioning service request, the base station determines that the object indicated by the first identifier carried by the positioning service request needs to be positioned, and the base station sends the excitation signal according to the positioning service request.

In some embodiments, the positioning service request may further carry a period indication field, and the base station may further periodically send the excitation signal according to a positioning period (e.g., including a positioning time interval and a positioning count) indicated by the period indication field, so as to implement periodic positioning.

In some embodiments, the excitation signal sent by the base station may also carry the period indication field, and the period indication field may be indicated by 1 bit.

In some embodiments, the base station sends the excitation signal when the AIoT device is in an inactive state.

In the embodiments of the application, the base station sends the excitation signal in a broadcasting or unicast manner. The broadcasting manner means that the base station broadcasts the excitation signal, and all the AIoT devices in the coverage range of the base station can receive the excitation signal. The unicast manner means that the base station sends the excitation signal to the AIoT device in a one-to-one manner.

In this way, the AIoT device can receive the excitation signal broadcast or unicast by the base station.

The AIoT device receives the excitation signal sent by the base station, the AIoT device can be activated by the excitation signal, and the AIoT device can be instructed to perform a positioning response by the excitation signal.

Step 302: sending, by the AIoT device, a reflected signal to the base station based on the excitation signal.

In a possible implementation, as described above, the excitation signal carries the first identifier, and under the condition that the first identifier indicates the AIoT device and/or the first identifier indicates the AIoT device group to which the AIoT device belongs, the AIoT device sends the reflected signal to the base station according to the excitation signal.

Exemplarily, if the first identifier indicates an AIoT device, the AIoT device can match the first identifier carried by the excitation signal with an identifier of the AIoT device. If the first identifier is matched with the identifier of the AIoT device, it indicates that the AIoT device needs to be positioned, and the AIoT device sends the reflected signal to the base station based on the excitation signal.

Exemplarily, if the first identifier indicates an AIoT device group, the AIoT device can match the first identifier carried by the excitation signal with an identifier of the AIoT device group to which the AIoT device belongs. If the first identifier is matched with the identifier of the AIoT device group, it indicates that the AIoT device group to which the AIoT device belongs needs to be positioned (that is, each AIoT device in the AIoT device group is positioned), and the AIoT device sends the reflected signal to the base station based on the excitation signal.

In some embodiments, on a base station side, after the base station receives the reflected signal, the base station may also verify an identity of the AIoT device based on the identifier carried by the reflected signal, and the process of verifying the identity of the AIoT device by the base station is described in the following embodiment.

It should be noted that, in the embodiments of the present application, for example, the first identifier is matched with the identifier of the AIoT device, which may mean that the first identifier is identical to the identifier of the AIoT device, or mean that the first identifier is different from the identifier of the AIoT device, but the first identifier and the identifier of the AIoT device indicate the same AIoT device (for example, the first identifier is obtained by encrypting the identifier of the AIoT device, or the first identifier is last N bits of the identifier of the AIoT device, N being a positive integer greater than 0, or the identifier of the AIoT device is obtained by encrypting the first identifier), or the first identifier and the identifier of the AIoT device indicate the same AIoT device group.

In another possible implementation, the excitation signal may not carry the first identifier, that is, the excitation signal does not indicate any AIoT device and any AIoT device group, and in this case, it is determined by default that all the AIoT devices in the coverage range of the base station need to be positioned. In this way, after the AIoT device receives the excitation signal, the AIoT device does not match the first identifier carried by the excitation signal, but directly sends the reflected signal to the base station based on the excitation signal.

In the embodiment of the application, the reflected signal sent by the AIoT device to the base station based on the excitation signal carries specified information, the specified information may be an identifier, the identifier may be the identifier of the AIoT device, and/or the identifier may be the identifier of the AIoT device group to which the AIoT device belongs.

As an implementation, a type of the identifier carried by the reflected signal may be consistent with a type of the first identifier carried by the excitation signal sent by the base station.

Under the condition that the first identifier indicates the AIoT device, the identifier carried by the reflected signal sent by the AIoT device to the base station based on the excitation signal may be the identifier of the AIoT device. Under the condition that the first identifier indicates the AIoT device group, the identifier carried by the reflected signal sent by the AIoT device to the base station based on the excitation signal may be the identifier of the AIoT device group to which the AIoT device belongs. Under the condition that the first identifier indicates the AIoT device and the AIoT device group, the identifier carried by the reflected signal sent by the AIoT device to the base station based on the excitation signal may be the identifier of the AIoT device and the identifier of the AIoT device group to which the AIoT device belongs.

After the base station receives the reflected signal sent by the AIoT device based on the excitation signal, the reflected signal is used for determining the location of the AIoT device, and the base station determines the location of the AIoT device according to the reflected signal. For example, the base station measures strength of the reflected signal, a received beam or other information, and can determine the location of the AIoT device according to the strength of the reflected signal, the received beam or the other information, so that positioning of the AIoT device is realized.

Compared to the positioning manners for the mobile terminal in the related art shown in FIG. 1-b and FIG. 1-c, the positioning method according to the embodiments of the application can reduce power consumption of the AIoT device, does not require the AIoT device to have a strong communication capability, and is beneficial to controlling a cost of the AIoT device.

In addition, in the embodiments of the application, under the condition that the excitation signal carries the first identifier, the first identifier indicates the AIoT device and/or the AIoT device group to which the AIoT device belongs, so that the embodiments of the application can realize the positioning of a certain AIoT device and/or a certain AIoT device group, avoiding the problems of poor positioning pertinence and poor positioning precision caused by the fact that only all the AIoT devices in the coverage range of the base station can be positioned.

In an embodiment, based on the embodiment shown in FIG. 3, the excitation signal in this embodiment includes a wake-up signal and a positioning signal, and referring to FIG. 4, the step 301 shown in FIG. 3 includes step 401 and step 402 shown in FIG. 4.

Step 401: receiving, by the AIoT device, the wake-up signal sent by the base station.

In this embodiment, the excitation signal may be split into the wake-up signal and the positioning signal, and the wake-up signal is configured to wake up the AIoT device.

In a possible implementation, the wake-up signal carries the first identifier. After obtaining the positioning service request, the base station determines that the object (the AIoT device and/or the AIoT device group) indicated by the first identifier carried by the positioning service request needs to be positioned. The base station sends the wake-up signal according to the positioning service request, and the wake-up signal carries the first identifier.

Similar to the sending manner of the excitation signal, the base station may broadcast or unicast the wake-up signal, and the AIoT device receives the wake-up signal broadcast or unicast by the base station. After the wake-up signal is received, the AIoT device is controlled to be in an active state according to the wake-up signal, that is, the AIoT device is activated by the wake-up signal.

In another possible implementation, the wake-up signal does not carry the first identifier, so that each AIoT device within the coverage range of the base station is activated after receiving the wake-up signal sent by the base station.

After the AIoT device is activated, the AIoT device accesses the base station, and the base station broadcasts or unicasts the positioning signal.

Step 402: under the condition of accessing the base station, receiving, by the AIoT device, the positioning signal sent by the base station for indicating positioning.

In some embodiments, when positioning a certain AIoT device and/or AIoT device group, under the condition that the base station broadcasts the positioning signal, the positioning signal may carry the first identifier, so as to instruct the AIoT device and/or the AIoT device group indicated by the first identifier to reflect the reflected signal for positioning. Under the condition that the base station unicasts the positioning signal, i.e., the base station sends the positioning signal to the AIoT device in a one-to-one manner, the positioning signal may not carry the first identifier.

In some embodiments, the wake-up signal and the positioning signal may not indicate any AIoT device and any AIoT device group. In this case, the wake-up signal and the positioning signal may not carry the first identifier, and it is determined by default that all the AIoT devices in the coverage range of the base station need to be positioned.

After the AIoT device receives the positioning signal sent by the base station, the AIoT device executes the following step 3021 to implement the process of the step 302.

Step 3021: sending the reflected signal to the base station by the AIoT device.

That is to say, the AIoT device sends the above-mentioned reflected signal to the base station, and the base station determines the location of the AIoT device according to the reflected signal.

In the embodiments of the present application, the excitation signal and the positioning signal may be sent respectively or in a combined manner, so that the positioning method has high implementation flexibility.

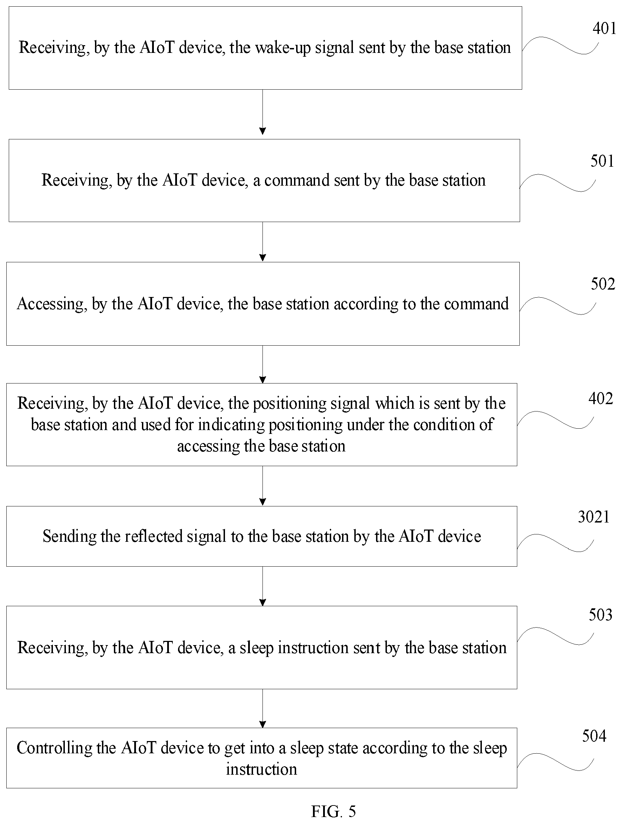

In an embodiment, based on the embodiment shown in FIG. 4, in this embodiment, before receiving the positioning signal sent by the base station, referring to FIG. 5, the positioning method according to this embodiment further includes step 501 and step 502 shown in FIG. 5.

Step 501: receiving, by the AIoT device, a command sent by the base station.

Step 502: accessing, by the AIoT device, the base station according to the command.

After the AIoT device receives the wake-up signal sent by the base station, the AIoT device is activated, and then, the AIoT device gets into a monitoring state to wait for accessing.

The base station may also send the command to the AIoT device, and the AIoT device accesses the base station according to the command after receiving the command sent by the base station. As an implementation, after accessing the base station, the AIoT device reports information thereof to the base station through the reflected signal. After receiving the reflected signal from the AIoT device, the base station determines, according to the reflected signal, that the AIoT device is the one that needs to be positioned.

The AIoT device receives the positioning signal sent by the base station, and sends the reflected signal to the base station.

In some embodiments, after determining that the AIoT device accesses the base station, the base station may further send a session command to the AIoT device, and the session command is configured to instruct the AIoT device to carry specified information in the reflected signal. The specified information may be the identifier mentioned above, and the identifier may be the identifier of the AIoT device and/or the identifier of the AIoT device group to which the AIoT device belongs.

The base station determines the location of the AIoT device according to the reflected signal, and a manner of determining the location of the AIoT device according to the reflected signal by the base station is described below.

With continued reference to FIG. 5, the positioning method according to this embodiment further includes step 503 and step 504 shown in FIG. 5.

Step 503: receiving, by the AIoT device, a sleep instruction sent by the base station.

Step 504: controlling the AIoT device to get into a sleep state according to the sleep instruction.

Under the condition that the current positioning process of the AIoT device is finished, the base station may receive a positioning process ending indication sent by the core network device, the positioning process ending indication is configured for indicating ending of the current positioning process of the AIoT device, and therefore, the base station may send the sleep instruction to the AIoT device according to the positioning process ending indication.

The AIoT device receives the sleep instruction sent by the base station, and the AIoT device is controlled to get into the sleep state according to the sleep instruction, so that the power consumption of the AIoT device is reduced.

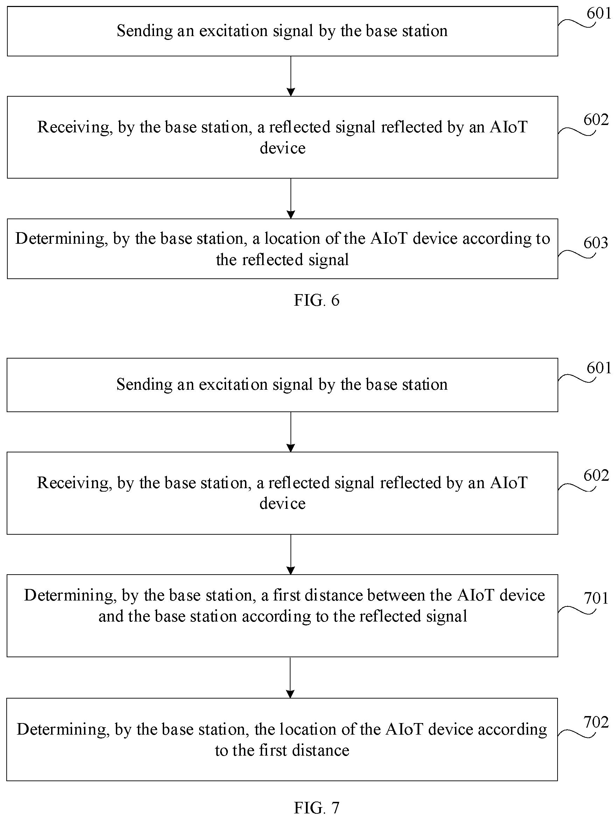

In an embodiment, as shown in FIG. 6, a positioning method is provided. The description is given with the method applied to the base station 100 in FIG. 2 as an example, and the method includes the following steps.

Step 601: sending an excitation signal by the base station.

The base station may broadcast or unicast the excitation signal.

Step 602: receiving, by the base station, a reflected signal reflected by an AIoT device.

Step 603: determining, by the base station, a location of the AIoT device according to the reflected signal.

For implementations of the step 601 and the step 602, reference may be made to the description related to the above embodiments, which are not repeated herein.

In the following, an implementation of the step 603 is exemplarily described.

In a possible implementation of the step 603, before the base station determines the location of the AIoT device according to the reflected signal, the base station may verify the identity of the AIoT device according to the identifier carried by the reflected signal, i.e., the base station determines whether the AIoT device sending the reflected signal is the AIoT device needing to be positioned. If the AIoT device sending the reflected signal is the AIoT device needing to be positioned, the base station determines the location of the AIoT device according to the reflected signal.

As described above, the reflected signal sent by the AIoT device to the base station carries the specified information, and the specified information may be the identifier. The type of the identifier carried by the reflected signal may be consistent with the type of the first identifier carried by the excitation signal sent by the base station, and the identifier may be the identifier of the AIoT device and/or the AIoT device group to which the AIoT device belongs.

In some embodiments, the base station determines whether the identifier carried by the reflected signal and the first identifier indicate the same AIoT device and/or indicate the same AIoT device group, and determines that the AIoT device sending the reflected signal is the AIoT device needing to be positioned when determining that the identifier carried by the reflected signal and the first identifier indicate the same AIoT device and/or indicate the same AIoT device group.

Exemplarily, in a case that the identifier carried by the reflected signal is an identifier of an AIoT device, and the first identifier is also the identifier of the AIoT device, the base station detects whether the identifier carried by the reflected signal and the first identifier indicate the same AIoT device, and if yes, it indicates that the reflected signal is sent by the AIoT device indicated by the first identifier, i.e., the AIoT device sending the reflected signal is the AIoT device needing to be positioned.

Exemplarily, in a case that the identifier carried by the reflected signal is an identifier of a passive Internet of Things terminal group to which the AIoT device belongs, and the first identifier is also the identifier of the AIoT device group, the base station detects whether the identifier carried by the reflected signal and the first identifier indicate the same AIoT device group, and if yes, it indicates that the reflected signal is sent by the AIoT device in the AIoT device group indicated by the first identifier, i.e., the AIoT device sending the reflected signal is the AIoT device needing to be positioned.

After the base station determines that the identity verification is passed, the base station determines the location of the AIoT device according to the reflected signal.

In a possible implementation of the step 603, referring to FIG. 7, the base station may implement the process of determining the location of the AIoT device according to the reflected signal through the following step 701 and step 702.

Step 701: determining, by the base station, a first distance between the AIoT device and the base station according to the reflected signal.

Hereinafter, the process of obtaining the first distance between the AIoT device and the base station according to the reflected signal by the base station is described in three possible implementations.
1) The base station may obtain, according to the reflected signal, received power strength corresponding to the reflected signal. The received power strength corresponding to the reflected signal refers to power strength of the reflected signal received by the base station. The base station may calculate the received power strength corresponding to the reflected signal according to the reflected signal and a calculation formula of the received power strength.

The base station determines the first distance between the AIoT device and the base station based on the calculated received power strength.

Exemplarily, a mapping relationship between received power strength and receiving distances may be preset in the base station. The base station calculates the received power strength corresponding to the reflected signal, and then looks up the receiving distance corresponding to the received power strength in the mapping relationship, thereby obtain the first distance.

2) The reflected signal may carry a sending time of the reflected signal sent by the AIoT device, the base station determines the sending time of the reflected signal sent by the AIoT device according to the reflected signal, and the base station also obtains a receiving time of the reflected signal received by the base station.

The base station determines a first time difference according to the sending time and the receiving time, that is, obtains the first time difference by subtracting the sending time from the receiving time, and the first time difference is a time consumed by transmission of the reflected signal in the form of an electromagnetic wave between the AIoT device and the base station.

The base station determines the first distance based on the first time difference. For example, the base station may multiply the first time difference by a speed of light to obtain the first distance.

3) The reflected signal may carry a second time difference between the sending time of the reflected signal sent by the AIoT device and a receiving time of the excitation signal received by the AIoT device, and the base station determines the second time difference between the sending time of the reflected signal sent by the AIoT device and the receiving time of the excitation signal received by the AIoT device according to the reflected signal.

The base station determines the receiving time of the reflected signal received by the base station according to the reflected signal, thereby determining a third time difference between the receiving time of the reflected signal received by the base station and the sending time of the excitation signal.

The base station determines the first distance according to the second time difference and the third time difference. Exemplarily, the base station averages the second time difference and the third time difference to obtain an average time difference, which is a distance time difference between the AIoT device and the base station, so as to obtain the first distance.

Therefore, through any one of the above implementations, the base station can obtain the first distance between the AIoT device and the base station.

Step 702: determining, by the base station, the location of the AIoT device according to the first distance.

In the embodiment of the application, the positioning service request sent by the core network device and received by the base station may also carry a positioning type, so that the base station can determine the location of the AIoT device according to the first distance and the positioning type.

The positioning type may be a relative positioning type or an absolute positioning type. The relative positioning type means that a location of the AIoT device relative to the base station needs to be obtained. The absolute positioning type means that an absolute location of the AIoT device needs to be obtained.

In the embodiments of the application, after receiving the excitation signal, the AIoT device sends the reflected signal based on the excitation signal, only the base station corresponding to the AIoT device (i.e., the AIoT device is in the coverage range of the base station) can receive the reflected signal, that is, only one base station receives the reflected signal. When the location of the AIoT device is determined, positioning is performed only according to the reflected signal received by that base station, and in this case, single-base station positioning is realized.

In a possible implementation, the positioning service request received by the base station is further configured to instruct the base station to determine the location of the AIoT device according to the reflected signal, that is, the base station is responsible for a solving process of the location of the AIoT device.

Exemplarily, the base station determines a corresponding receiving direction angle when the reflected signal is received, and then, the base station may determine the location of the AIoT device relative to the base station according to the first distance and the receiving direction angle. For example, the AIoT device is at 30 degrees south of east from the base station and is 1km away from the base station.

The base station determines the location of the AIoT device according to the location of the AIoT device relative to the base station and the positioning type.

In some embodiments, in a case that the positioning type is the relative positioning type, the base station directly uses the location of the AIoT device relative to the base station as the location of the AIoT device.

In some embodiments, in a case that the positioning type is the absolute positioning type, the base station obtains a first base station location of the base station, and determines the location of the AIoT device according to the location of the AIoT device relative to the base station and the first base station location, that is, the base station solves the location of the AIoT device (i.e., the absolute location of the AIoT device) according to the location of the base station.

In another possible implementation, the location of the AIoT device may also be determined by the core network device.

Exemplarily, the base station determines the first distance between the AIoT device and the base station according to the reflected signal through the above implementation, and the base station sends the first distance to the core network device, the first distance being configured for the core network device to determine the location of the AIoT device.

The core network device receives the first distance between the AIoT device and the base station sent by the base station. In some embodiments, the base station may send the positioning service request to the core network device, and the core network device determines the location of the AIoT device according to the first distance and the positioning type indicated by a positioning type field carried by the positioning service request.

As an implementation, the base station may also send the corresponding receiving direction angle when the base station receives the reflected signal to the core network device. The core network device receives the receiving direction angle of the base station which is sent by the base station and corresponds to the reflected signal. The core network device determines the location of the AIoT device relative to the base station according to the first distance and the receiving direction angle. The core network device determines the location of the AIoT device according to the location of the AIoT device relative to the base station and the positioning type.

In some embodiments, in a case that the positioning type is the relative positioning type, the core network device uses the location of the AIoT device relative to the base station as the location of the AIoT device.

In some embodiments, in a case that the positioning type is the absolute positioning type, the core network device obtains the first base station location of the base station, and determines the location of the AIoT device according to the location of the AIoT device relative to the base station and the first base station location.

For implementations in which the core network device determines the location of the AIoT device relative to the base station according to the first distance and the receiving direction angle, and the core network device determines the location of the AIoT device according to the location of the AIoT device relative to the base station and the positioning type, reference may be made to the relevant descriptions in the implementation in which the base station determines the location of the AIoT device, which are not repeated herein.

In another possible implementation of the step 603, after receiving the excitation signal, the AIoT device sends the reflected signal based on the excitation signal. In addition to the base station corresponding to the AIoT device, a neighboring base station of the base station may also receive the reflected signal, so that when determining the location of the AIoT device, positioning may be performed by combining the reflected signals received by a plurality of base stations, and in this case, multi-base station positioning is realized.

When sending the excitation signal, the base station may also sends resource configuration information for sending the excitation signal and the first identifier to at least one neighboring base station, and the resource configuration information and the first identifier are configured for the neighboring base station to receive the reflected signal based on the resource configuration information and the first identifier, so as to determine the location of the AIoT device.

In some embodiments, the base station may directly send the resource configuration information and the first identifier to the neighboring base station in a point-to-point manner. In some embodiments, the base station may send the resource configuration information and the first identifier to the core network device, and the core network device forwards the resource configuration information and the first identifier to the neighboring base station, that is, the base station sends the resource configuration information for sending the excitation signal and the first identifier to at least one neighboring base station corresponding to the base station through the core network device.

In the embodiments of the present application, the resource configuration information is configured for indicating a beam configuration, a time domain resource configuration and a frequency domain resource configuration for sending the excitation signal by the base station, the neighboring base station can learn information such as time-frequency domain resource for sending the excitation signal by the base station, and the neighboring base station receives the reflected signal sent by the AIoT device on the time-frequency domain resource indicated by the resource configuration information.

As an implementation, the neighboring base station may further verify the identity of the AIoT device according to the identifier carried by the received reflected signal and the first identifier sent by the base station, and continue the subsequent positioning process when the identity verification is passed. For an implementation in which the neighboring base station verifies the identity of the AIoT device according to the identifier carried by the reflected signal and the first identifier, reference may be made to the above description about the identity verification performed by the base station on the AIoT device, which is not repeated herein.

In addition, similarly, as described above, the base station determines the first distance between the AIoT device and the base station according to the reflected signal, and the base station determines the location of the AIoT device according to the first distance and the positioning type indicated by the positioning type field. In a possible implementation, the base station may obtain a second distance between each neighboring base station and the AIoT device by performing communication interaction with each neighboring base station. The second distance may be a distance between the AIoT device determined by the neighboring base station according to the reflected signal and the neighboring base station, and for the manner of determining the second distance by the neighboring base station, reference may be made to the above relevant description of determining the first distance by the base station, which is not repeated herein.

Then, the base station determines the location of the AIoT device according to the first distance, each second distance and the positioning type.

As an implementation, the base station substitutes the first distance and each second distance into a preset formula for operation, so as to obtain a candidate location of the AIoT device, herein, at least two neighboring base stations are provided.

It can be understood that, taking the base station as an example, the first distance between the AIoT device and the base station may be calculated by using location coordinates of the AIoT device and location coordinates of the first base station location of the base station.

Assuming that the candidate location of the AIoT device is unknown, (x, y, z), (x1, y1, z1) is the first base station location of the base station, the number of the neighboring base stations is two, (x2, y2, z2) is a second base station location of one neighboring base station, (x3, y3, z3) is a second base station location of the other neighboring base station, L1 is the first distance, L2 is the second distance corresponding to one neighboring base station, and L3 is the second distance corresponding to the other neighboring base station, a three-unknown linear equation set can be established, and the candidate location (x, y, z) of the AIoT device is obtained by solving the three-unknown linear equation set. Herein, the second base station location of the neighboring base station may be sent by the neighboring base station to the base station, or pre-configured in the base station, or sent by the core network device to the base station, and so on.

The base station determines the location of the AIoT device according to the candidate location and the positioning type.

In some embodiments, if the positioning type is the absolute positioning type, the base station uses the candidate location as the location of the AIoT device.

In some embodiments, if the positioning type is the relative positioning type, the base station obtains the first base station location of the base station, and determines the location of the AIoT device according to the candidate location and the first base station location, that is, the base station obtains the location of the AIoT device relative to the base station (i.e., the relative location of the AIoT device) according to the location of the base station.

In another possible implementation, similar to the single-base station positioning manner, the location of the AIoT device may also be determined by the core network device.

Exemplarily, the base station sends at least the first distance between the AIoT device and the base station and the positioning service request to the core network device, each neighboring base station sends at least the second distance between the neighboring base station and the AIoT device to the core network device, the core network device substitutes the first distance and each second distance into the preset formula for operation to obtain the candidate location of the AIoT device, and the location of the AIoT device is determined according to the candidate location and the positioning type.

Therefore, through the above different implementations, the process of determining the location of the AIoT device according to the first distance and the positioning type is realized. In the embodiment of the application, the location of the AIoT device is determined flexibly, and implementation flexibility is high.

The above embodiments related to the positioning method for the base station only emphasize the implementation processes of verifying the identity of the AIoT device by the base station and determining the location of the AIoT device by the base station, and for other steps that may be performed by the base station, reference may be made to the above related description in the positioning method for the AIoT device, which are not repeated herein.

In an embodiment, a positioning method is provided. The method is applied in the core network device 300 shown in FIG. 2, and includes the following step.

Step A1: sending, by the core network device, a positioning service request to a base station.

In some embodiments, the positioning service request carries a first identifier.

In an embodiment, before sending, by the core network device, the positioning service request to the base station, the positioning method according to this embodiment further includes:
step A2: determining, by the core network device, a base station storing the first identifier according to the first identifier.

In an embodiment, the positioning method according to this embodiment further includes:
step A3: receiving, by the core network device, resource configuration information for sending an excitation signal and the first identifier which are sent by the base station; and
step A4: forwarding, by the core network device, the resource configuration information and the first identifier to at least one neighboring base station corresponding to the base station.

Herein, resource configuration information and the first identifier are configured for the neighboring base station to receive a reflected signal based on the resource configuration information and the first identifier, so as to determine a location of an AIoT device.

In an embodiment, the positioning method according to this embodiment further includes:
step A5: receiving, by the core network device, a first distance between the AIoT device and the base station sent by the base station; and
step A6: determining, by the core network device, the location of the AIoT device according to the first distance.

In the embodiment of the application, the process of determining the location of the AIoT device by the core network device according to the first distance is similar to the process of determining the location of the AIoT device by the base station according to the first distance, and includes a single-base station positioning scene and a multi-base station positioning scene.

For the single-base station positioning scene, the base station may further send a corresponding receiving direction angle when the base station receives the reflected signal to the core network device, and the core network device may determine a location of the AIoT device relative to the base station according to the first distance and the receiving direction angle. For example, the AIoT device is at 30 degrees south of east from the base station and is 1km away from the base station.

The core network device determines the location of the AIoT device according to the location of the AIoT device relative to the base station and a positioning type.

In some embodiments, in a case that the positioning type is a relative positioning type, the core network device uses the location of the AIoT device relative to the base station as the location of the AIoT device.

In some embodiments, in a case that the positioning type is an absolute positioning type, the core network device obtains a first base station location of the base station, and determines the location of the AIoT device according to the location of the AIoT device relative to the base station and the first base station location, that is, the core network device obtains the location of the AIoT device (i.e., an absolute location of the AIoT device) according to the first base station location.

For the multi-base station positioning scene, the core network device can receive second distances between the neighboring base stations and the AIoT device sent by the neighboring base stations, and then determine the location of the AIoT device according to the first distance, the second distances and the positioning type, so that the process of determining the location of the AIoT device according to the first distance and the positioning type indicated by a positioning type field carried by the positioning service request is realized.

In an embodiment, the core network device may substitute the first distance and each second distance into a preset formula for operation, so as to obtain a candidate location of the AIoT device, the number of the neighboring base stations is at least two, the core network device determines the location of the AIoT device according to the candidate location and the positioning type, and the process of determining the location of the AIoT device according to the first distance, the second distances and the positioning type is realized.

In a case that the positioning type is the absolute positioning type, the core network device takes the candidate location as the location of the AIoT device. In a case that the positioning type is the relative positioning type, the core network device obtains the first base station location of the base station, and determines the location of the AIoT device according to the candidate location and the first base station position.

In an embodiment, before sending the positioning service request to the base station, the core network device may further receive the positioning service request sent by a client, and correspondingly, after sending the positioning service request to the base station, the core network device may further send the location of the AIoT device to the client.

For the implementation and beneficial effects of the positioning method applied in the core network device, reference may be made to the above relevant descriptions of the positioning method for the AIoT device and the positioning method for the base station, which are not repeated herein.

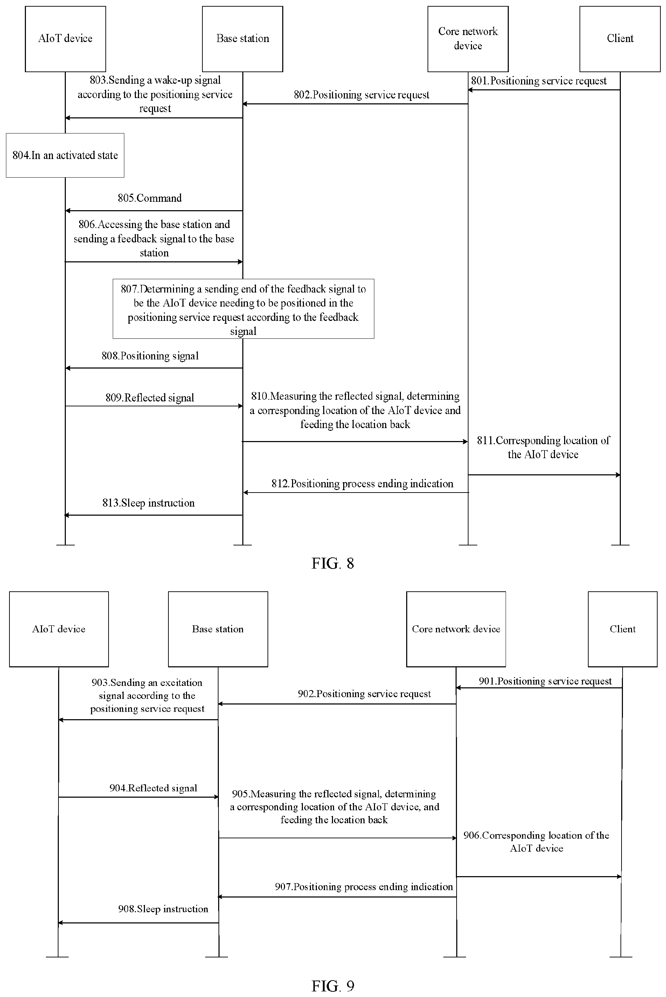

Hereinafter, the positioning method according to the embodiments of the present application is exemplarily illustrated by three examples.
1) Referring to FIG. 8, a positioning method according to this embodiment includes the following steps.

Step 801: receiving, by a core network device, a positioning service request sent by a client.

Step 802: sending, by the core network device, the positioning service request to a base station.

Step 803: sending, by the base station, a wake-up signal according to the positioning service request.

Step 804: controlling an AIoT device to be in an active state under the instruction of to the wake-up signal.

Step 805: sending a command by the base station.

Step 806: accessing the base station according to the command and sending a feedback signal to the base station by the AIoT device.

Step 807: receiving the feedback signal and determining a sending end of the feedback signal to be the AIoT device needing to be positioned in the positioning service request according to the feedback signal by the base station.

Step 808: sending a positioning signal by the base station.

In some embodiments, the base station sends a session command, and the session command is configured to instruct the AIoT device to carry specified information in a reflected signal.

The base station sends resource configuration information to at least one neighboring base station corresponding to the base station.

Step 809: sending the reflected signal by the AIoT device, the reflected signal carrying the specified information such as an identifier of the AIoT device.

Step 810: measuring the reflected signal, determining a location of the AIoT device, and feeding the location of the AIoT device back to the core network device by the base station.

The neighboring base station may also receive the reflected signal according to the resource configuration information, measure the reflected signal, and determine the location of the AIoT device by combining a measurement result of the base station and a measurement result of the neighboring base station.

In some embodiments, the base station and the neighboring base station send the measurement results to the core network device, and the core network device determines the location of the AIoT device.

Step 811: sending, by the core network device, the location of the AIoT device to the client.

Step 812: sending, by the core network device, a positioning process ending indication to the base station, the positioning process ending indication being a sleep instruction.

Step 813: sending, by the base station, the sleep instruction to the AIoT device.

In some embodiments, in the embodiment shown in FIG. 8, the base station may also periodically send a third signal and a fourth signal to implement periodic positioning, and related parameters of the periodic positioning are transferred to the neighboring base station through Xn or NRPPa.

2) Referring to FIG. 9, a positioning method according to this embodiment includes the following steps.

Step 901: receiving, by a core network device, a positioning service request sent by a client.

Step 902: sending, by the core network device, the positioning service request to a base station.

Step 903: sending, by the base station, an excitation signal according to the positioning service request.

The base station also sends resource configuration information to at least one neighboring base station corresponding to the base station.

Step 904: sending a reflected signal by an AIoT device, the reflected signal carrying specified information such as an identifier of the AIoT device.

Step 905: measuring the reflected signal, determining a location of the AIoT device, and feeding the location of the AIoT device back to the core network device by the base station.

The neighboring base station receives the reflected signal according to the resource configuration information, measures the reflected signal, and determines the location of the AIoT device by combining a measurement result of the base station and a measurement result of the neighboring base station.

In some embodiments, the base station and the neighboring base station send the measurement results to the core network device, and the core network device determines the location of the AIoT device.

Step 906: sending, by the core network device, the location of the AIoT device to the client.

Step 907: sending, by the core network device, a positioning process ending indication to the base station, the positioning process ending indication being a sleep instruction.

Step 908: sending, by the base station, the sleep instruction to the AIoT device.

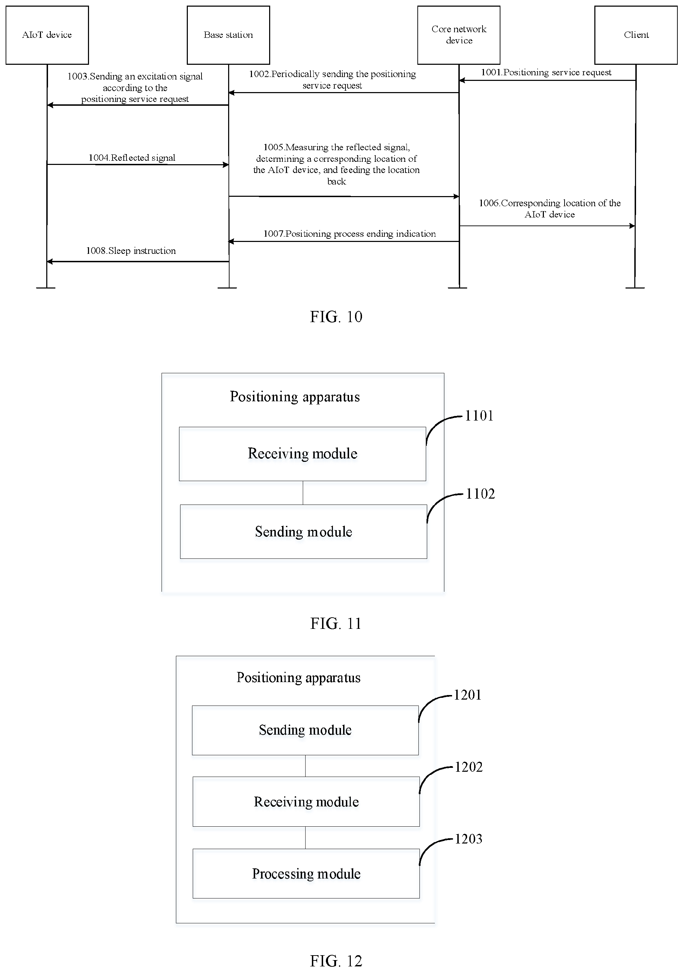

3) Referring to FIG. 10, a positioning method according to this embodiment includes the following steps.

Step 1001: receiving, by a core network device, a positioning service request sent by a client.

Step 1002: periodically sending, by the core network device, the positioning service request to a base station.

Step 1003: sending, by the base station, an excitation signal according to the positioning service request.

The base station also sends resource configuration information to at least one neighboring base station corresponding to the base station; related parameters of periodic positioning are transferred to the neighboring base station through Xn or NRPPa.

Step 1004: sending a reflected signal by a AIoT device, the reflected signal carrying specified information such as an identifier of the AIoT device.

In some embodiments, before the step 1004, the base station may also send a session command, and the session command is configured to instruct the AIoT device to carry the specified information in the reflected signal.

Step 1005: measuring the reflected signal, determining a location of the AIoT device, and feeding the location of the AIoT device back to the core network device by the base station.

The neighboring base station receives the reflected signal according to the resource configuration information, measures the reflected signal, and determines the location of the AIoT device by combining a measurement result of the base station and a measurement result of the neighboring base station.

In some embodiments, the base station and the neighboring base station send the measurement results to the core network device, and the core network device determines the location of the AIoT device.

Step 1006: sending, by the core network device, the location of the AIoT device to the client.

Step 1007: sending, by the core network device, a positioning process ending indication to the base station, the positioning process ending indication being a sleep instruction.

Step 1008: sending, by the base station, the sleep instruction to the AIoT device.

In the positioning method according to the embodiments of the present application, the AIoT device is positioned through maintenance and monitoring on a network side, and compared with the manner that the mobile terminal needs to monitor a paging service in the related art, the embodiments of the present application meet the positioning requirements of the industrial Internet of Things for extremely low power consumption and cost of the AIoT device.

It should be understood that, although the steps in the above flow charts are shown in sequence as indicated by the arrows, the steps are not necessarily performed in sequence as indicated by the arrows. Unless explicitly stated herein, the steps are not limited to being performed in the exact order and may be performed in other orders. At least part of the steps in the above flow charts may include multiple steps or multiple stages, which are not necessarily performed at the same moment, but may be performed at different moments, and the steps or the stages are not necessarily performed in sequence, but may be performed alternately with other steps or at least part of the steps or the stages in other steps.

In an embodiment, as shown in FIG. 11, there is provided a positioning apparatus applied in an AIoT device, including:
a receiving module 1101 configured to receive an excitation signal sent by a base station; and
a sending module 1102 configured to send a reflected signal to the base station based on the excitation signal, the reflected signal being configured for determining a location of the AIoT device.

In an embodiment, the receiving module 1101 includes:
a first receiving unit configured to receive a wake-up signal sent by the base station, the wake-up signal being configured for waking up the AIoT device; and
a second receiving unit configured to receive a positioning signal which is sent by the base station and configured for indicating positioning under the condition of accessing the base station.

In an embodiment, the apparatus further includes:
a control module configured to, after the wake-up signal is received, control the AIoT device to be in an active state according to the wake-up signal.

In an embodiment, the excitation signal carries a first identifier, and the sending module 1102 is configured to, under the condition that the first identifier indicates the AIoT device and/or the first identifier indicates an AIoT device group to which the AIoT device belongs, send the reflected signal to the base station according to the excitation signal.

In an embodiment, the receiving module 1101 is further configured to receive a sleep instruction sent by the base station; and
the control module is further configured to control the AIoT device to get into a sleep state according to the sleep instruction.

In an embodiment, the receiving module 1101 is configured to receive the excitation signal sent by the base station in a broadcast manner or in a point-to-point manner.

For the definitions of the positioning apparatus for the AIoT device, reference may be made to the above definitions of the positioning method for the AIoT device, which are not repeated herein. The modules in the positioning apparatus may be wholly or partially implemented by software, hardware and a combination thereof. The modules may be embedded in or independent of a processor in the AIoT device in hardware, or may be stored in a memory in the AIoT device in software, so that the processor can conveniently call the modules to execute the operations corresponding to the modules.

In an embodiment, as shown in FIG. 12, there is provided a positioning apparatus applied in a base station, including:
a sending module 1201 configured to send an excitation signal;
a receiving module 1202 configured to receive a reflected signal reflected by an AIoT device; and
a processing module 1203 configured to determine a location of the AIoT device according to the reflected signal.

In an embodiment, the excitation signal carries a first identifier, and the first identifier is configured to instruct the AIoT device indicated by the first identifier and/or at least one AIoT device in a AIoT device group indicated by the first identifier to reflect the reflected signal.

In an embodiment, the processing module 1203 includes:
a determining unit configured to determine whether the AIoT device sending the reflected signal is an AIoT device needing positioning according to an identifier carried by the reflected signal; and
a processing unit configured to, in a case that the AIoT device sending the reflected signal is the AIoT device needing positioning, determine the location of the AIoT device according to the reflected signal.

In an embodiment, the determining unit is configured to, under the condition that the identifier carried by the reflected signal and the first identifier indicate the same AIoT device and/or the same AIoT device group, determine that the AIoT device sending the reflected signal is the AIoT device needing positioning.

In an embodiment, the receiving module 1202 is further configured to receive a positioning service request sent by a core network device, the positioning service request carrying the first identifier.

In an embodiment, the processing module 1203 is configured to determine a first distance between the AIoT device and the base station according to the reflected signal;
the sending module 1201 is further configured to send the first distance to the core network device, the first distance being configured for the core network device to determine the location of the AIoT device.

In an embodiment, the sending module 1201 is further configured to send resource configuration information for sending the excitation signal and the first identifier to at least one neighboring base station;
where the neighboring base station receives the reflected signal based on the resource configuration information and the first identifier.

In an embodiment, the processing module 1203 is configured to determine a first distance between the AIoT device and the base station according to the reflected signal;
the receiving module 1202 is further configured to receive a second distance between each neighboring base station and the AIoT device sent by each neighboring base station, the second distance being determined by the neighboring base station according to the reflected signal; and
the processing module 1203 is further configured to determine the location of the AIoT device according to the first distance and the second distances.

In an embodiment, the receiving module 1202 is further configured to receive a positioning process ending indication sent by the core network device; and
the sending module 1201 is further configured to send a sleep instruction to the AIoT device according to the positioning process ending indication.

For the definitions of the positioning apparatus for the base station, reference may be made to the above definitions of the positioning method for the base station, which are not repeated herein. The modules in the positioning apparatus may be wholly or partially implemented by software, hardware and a combination thereof. The modules may be embedded in or independent of a processor in the base station in hardware, or may be stored in a memory in the base station in software, so that the processor can conveniently call the modules to execute the operations corresponding to the modules.

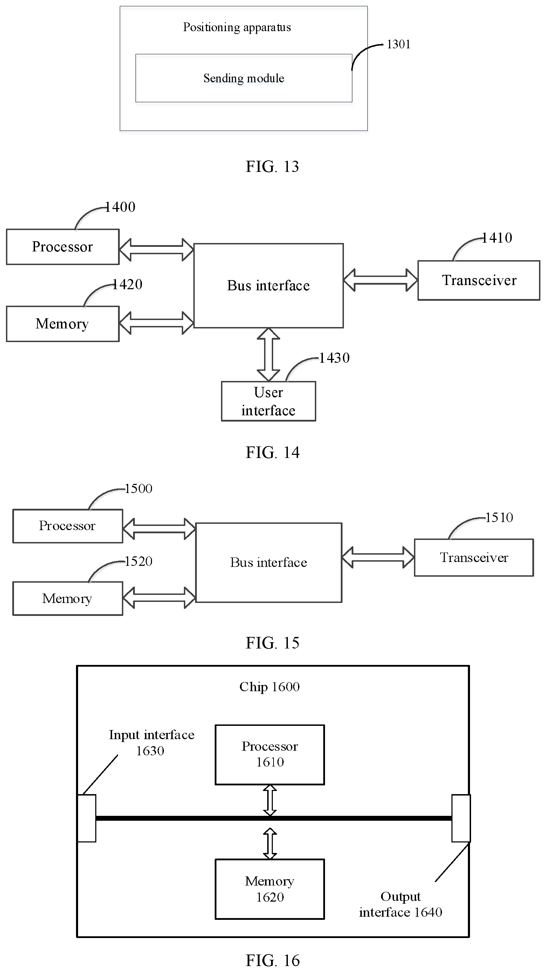

In an embodiment, as shown in FIG. 13, there is provided a positioning apparatus applied in a core network device, including:
a sending module 1301 configured to send a positioning service request to a base station;
where the positioning service request carries a first identifier.

In an embodiment, the apparatus further includes:
a processing module configured to determine a base station storing the first identifier according to the first identifier.

In an embodiment, the apparatus further includes:
a receiving module configured to receive a first distance between an AIoT device and the base station sent by the base station as well as the positioning service request;
the processing module is further configured to determine a location of the AIoT device according to the first distance and the positioning service request.

In an embodiment, the receiving module is further configured to receive resource configuration information configured for sending an excitation signal and the first identifier sent by the base station;
the sending module 1301 is further configured to forward the resource configuration information and the first identifier to at least one neighboring base station corresponding to the base station;
where the neighboring base station receives a reflected signal based on the resource configuration information and the first identifier, so as to determine the location of the AIoT device.

In an embodiment, the receiving module is further configured to receive the positioning service request sent by a client;
the sending module 1301 is further configured to send the location of the AIoT device to the client.

For the definitions of the positioning apparatus for the core network device, reference may be made to the above definitions of the positioning method for the core network device, which are not repeated herein. The modules in the positioning apparatus may be wholly or partially implemented by software, hardware and a combination thereof. The modules may be embedded in or independent of a processor in a core network device in hardware, or may be stored in a memory in the core network device in software, such that the processor can conveniently call the modules to execute the operations corresponding to the modules.

FIG. 14 is a schematic structural diagram of an AIoT device according to an embodiment of the present application. As shown in FIG. 14, the AIoT device includes a processor 1400, a transceiver 1410 and a memory 1420, and the transceiver 1410 is configured to receive and send data under control of the processor 1400.

In FIG. 14, a bus architecture may include any number of interconnected buses and bridges, which link various circuits of one or more processors represented by the processor 1400 and memories represented by the memory 1420 together.

The bus architecture may also link together various other circuits such as peripherals, voltage regulators, and power management circuits, which are well known in the art, and therefore, will not be further described herein. A bus interface provides an interface.

The transceiver 1410 may be a number of elements, that is, include a transmitter and a receiver, and provide a unit for communication with various other apparatuses over transmission media including wireless channels, wired channels, fiber optic cables, or the like. For different user equipment, the user interface 1430 may be an interface capable of externally or internally connecting required devices, and the connected devices include, but are not limited to, a keypad, a display, a loudspeaker, a microphone, a joystick, or the like.

The processor 1400 is responsible for managing the bus architecture and general processing, and the memory 1420 may store data used when the processor 1400 performs operations.

In some embodiments, the processor 1400 may be a Central Processing Unit (CPU), an Application Specific Integrated Circuit (ASIC), a Field-Programmable Gate Array (FPGA), or a Complex Programmable Logic Device (CPLD), and may also adopt a multi-core architecture.

The processor 1400 is configured to execute any method according to the embodiments of the present application according to obtained executable instructions by calling the program stored in the memory 1420. The processor 1400 and the memory 1420 may be physically arranged separately.

The processor 1400 is configured to read a computer program in the memory 1420 and perform the following operations:
controlling the transceiver 1410 to receive an excitation signal sent by a base station; and
controlling the transceiver 1410 to, send a reflected signal to the base station based on the excitation signal, the reflected signal being configured for determining a location of the AIoT device.

In an embodiment, the processor 1400 is configured to read the computer program in the memory and perform the following operations:
controlling the transceiver 1410 to receive a wake-up signal sent by the base station, the wake-up signal being configured for waking up the AIoT device; and
controlling the transceiver 1410 to receive a positioning signal sent by the base station for indicating positioning under the condition of accessing the base station.

In an embodiment, the processor 1400 is configured to read the computer program in the memory and further perform the following operation:
after the wake-up signal is received, controlling the AIoT device to be in an active state according to the wake-up signal.

In an embodiment, the processor 1400 is configured to read the computer program in the memory and perform the following operation:
under the condition that the first identifier indicates the AIoT device and/or the first identifier indicates an AIoT device group to which the AIoT device belongs, sending the reflected signal to the base station according to the excitation signal.

In an embodiment, the processor 1400 is configured to read the computer program in the memory and further perform the following operations:
controlling the transceiver 1410 to receive a sleep instruction sent by the base station; and
controlling the AIoT device to get into a sleep state according to the sleep instruction.

In an embodiment, the processor 1400 is configured to read the computer program in the memory and further perform the following operation:
controlling the transceiver 1410 to receive the excitation signal sent by the base station in a broadcast manner or in a point-to-point manner.

FIG. 15 is a schematic structural diagram of a base station or a core network device according to an embodiment of the present application. The base station or the core network device may include a processor 1500, a transceiver 1510 and a memory 1520. The transceiver 1510 is configured to receive and send data under control of the processor 1500.

In FIG. 15, a bus architecture may include any number of interconnected buses and bridges, which link various circuits of one or more processors represented by the processor 1500 and memories represented by the memory 1520 together. The bus architecture may also link together various other circuits such as peripherals, voltage regulators, and power management circuits, which are well known in the art, and therefore, will not be further described herein. A bus interface provides an interface.

The transceiver 1510 may be a number of elements, that is, include a transmitter and a receiver, and provide a unit for communication with various other apparatuses over transmission media including wireless channels, wired channels, fiber optic cables, or the like. The processor 1500 is responsible for managing the bus architecture and general processing, and the memory 1520 may store data used when the processor 1500 performs operations.

The processor 1500 may be a Central Processing Unit (CPU), an Application Specific Integrated Circuit (ASIC), a Field-Programmable Gate Array (FPGA), or a Complex Programmable Logic Device (CPLD), and may also adopt a multi-core architecture.

In the base station, the processor 1500 reads a program stored in the memory 1520 and performs the following steps:
controlling the transceiver 1510 to send an excitation signal;
controlling the transceiver 1510 to receive a reflected signal reflected by an AIoT device; and
determining a location of the AIoT device according to the reflected signal.

In an embodiment, the excitation signal carries a first identifier, and the first identifier is configured to instruct the AIoT device indicated by the first identifier and/or at least one AIoT device in an AIoT device group indicated by the first identifier to reflect the reflected signal.

In an embodiment, the processor 1500 is configured to read the computer program in the memory 1520 and perform the following operations:
determining whether the AIoT device sending the reflected signal is an AIoT device needing positioning according to an identifier carried by the reflected signal; and
in a case that the AIoT device sending the reflected signal is the AIoT device needing positioning, determining the location of the AIoT device according to the reflected signal.

In an embodiment, the processor 1500 is configured to read the computer program in the memory 1520 and perform the following operation:
under the condition that the identifier carried by the reflected signal and the first identifier indicate the same AIoT device and/or the same AIoT device group, determining that the AIoT device sending the reflected signal is the AIoT device needing positioning.

In an embodiment, the processor 1500 is configured to read the computer program in the memory 1520 and further perform the following operation:
controlling the transceiver 1510 to receive a positioning service request sent by a core network device, the positioning service request carrying the first identifier.

In an embodiment, the processor 1500 is configured to read the computer program in the memory 1520 and perform the following operations:
determining a first distance between the AIoT device and the base station according to the reflected signal;
controlling the transceiver 1510 to send the first distance to the core network device, the first distance being configured for the core network device to determine the location of the AIoT device.

In an embodiment, the processor 1500 is configured to read the computer program in the memory 1520 and further perform the following operation:
controlling the transceiver 1510 to send resource configuration information for sending the excitation signal and the first identifier to at least one neighboring base station;
where the neighboring base station receives the reflected signal based on the resource configuration information and the first identifier.

In an embodiment, the processor 1500 is configured to read the computer program in the memory 1520 and perform the following operations:
determining a first distance between the AIoT device and the base station according to the reflected signal;
controlling the transceiver 1510 to receive a second distance between each neighboring base station and the AIoT device sent by each neighboring base station, the second distance being determined by the neighboring base station according to the reflected signal; and
determining the location of the AIoT device according to the first distance and the second distances.

In an embodiment, the processor 1500 is configured to read the computer program in the memory 1520 and further perform the following operations:
controlling the transceiver 1510 to receive a positioning process ending indication sent by the core network device; and
controlling the transceiver 1510 to send a sleep instruction to the AIoT device according to the positioning process ending indication.

In the core network device, the processor 1500 reads a program stored in the memory 1520 and performs the following step:
controlling the transceiver 1510 to send a positioning service request to a base station;
where the positioning service request carries a first identifier.

In an embodiment, the processor 1500 is configured to read the computer program in the memory 1520 and further perform the following operation:
determining a base station storing the first identifier according to the first identifier.

In an embodiment, the processor 1500 is configured to read the computer program in the memory 1520 and further perform the following operations:
controlling the transceiver 1510 to receive a first distance between a AIoT device and the base station sent by the base station as well as the positioning service request; and
determining a location of the AIoT device according to the first distance and the positioning service request.

In an embodiment, the processor 1500 is configured to read the computer program in the memory 1520 and further perform the following operations:
controlling the transceiver 1510 to receive resource configuration information for sending an excitation signal and the first identifier which are sent by the base station; and
controlling the transceiver 1510 to forward the resource configuration information and the first identifier to at least one neighboring base station corresponding to the base station;
where the neighboring base station receives a reflected signal based on the resource configuration information and the first identifier, so as to determine a location of an AIoT device.

In an embodiment, the processor 1500 is configured to read the computer program in the memory 1520 and further perform the following operation:
controlling the transceiver 1510 to receive the positioning service request sent by a client;
after sending the positioning service request to the base station, the method further includes:
controlling the transceiver 1510 to send the location of the AIoT device to the client.

In an embodiment, there is provided a data collecting system, including an AIoT device, a base station, and a core network device.

The AIoT device is configured to perform the steps of the positioning method applied in the AIoT device according to any embodiment, which are not repeated herein.

The base station is configured to perform the steps of the positioning method applied in the base station according to any embodiment, which are not repeated herein.

The core network device is configured to perform the steps of the positioning method applied in the core network device according to any embodiment, which are not repeated herein.

An embodiment provides a computer-readable storage medium. The computer-readable storage medium may be any available medium or data storage device that can be accessed by a processor, including but not limited to a magnetic memory (e.g., a floppy disk, a hard disk, magnetic tape, a magneto-optical disk (MO), etc.), an optical memory (e.g., a CD, a DVD, a BD, an HVD, etc.), and a semiconductor memory (e.g., an ROM, an EPROM, an EEPROM, a non-transitory memory (NAND FLASH), and a solid state disk (SSDs)), etc.

In an embodiment, there is provided a computer-readable storage medium having a computer program stored thereon, the computer program, when executed by a processor, implementing the following steps:
receiving an excitation signal sent by a base station; and
sending a reflected signal to the base station based on the excitation signal, the reflected signal being configured for determining a location of the AIoT device.

In an embodiment, the computer program, when executed by the processor, implements the following steps:
receiving a wake-up signal sent by the base station, the wake-up signal being configured for waking up the AIoT device; and
receiving a positioning signal sent by the base station for indicating positioning under the condition of accessing the base station.

In an embodiment, the computer program, when executed by the processor, also implements the following step:
after the wake-up signal is received, controlling the AIoT device to be in an active state according to the wake-up signal.

In an embodiment, the computer program, when executed by the processor, implements the following step:
under the condition that the first identifier indicates the AIoT device and/or the first identifier indicates an AIoT device group to which the AIoT device belongs, sending the reflected signal to the base station according to the excitation signal.

In an embodiment, the computer program, when executed by the processor, also implements the following steps:
receiving a sleep instruction sent by the base station; and
controlling the AIoT device to get into a sleep state according to the sleep instruction.

In an embodiment, the computer program, when executed by the processor, implements the following step:
receiving the excitation signal sent by the base station in a broadcast manner or in a point-to-point manner.

In an embodiment, there is provided a computer-readable storage medium having a computer program stored thereon, the computer program, when executed by a processor, implementing the following steps:
sending an excitation signal;
receiving a reflected signal reflected by an AIoT device; and
determining a location of the AIoT device according to the reflected signal.

In an embodiment, the excitation signal carries a first identifier, and the first identifier is configured to instruct the AIoT device indicated by the first identifier and/or at least one AIoT device in a AIoT device group indicated by the first identifier to reflect the reflected signal.

In an embodiment, the computer program, when executed by the processor, implements the following steps:
determining whether the AIoT device sending the reflected signal is an AIoT device needing positioning according to an identifier carried by the reflected signal; and
in a case that the AIoT device sending the reflected signal is the AIoT device needing positioning, determining the location of the AIoT device according to the reflected signal.

In an embodiment, the computer program, when executed by the processor, implements the following step:
under the condition that the identifier carried by the reflected signal and the first identifier indicate the same AIoT device and/or the same AIoT device group, determining that the AIoT device sending the reflected signal is the AIoT device needing positioning.

In an embodiment, the computer program, when executed by the processor, also implements the following step:
receiving a positioning service request sent by a core network device, the positioning service request carrying the first identifier.

In an embodiment, the computer program, when executed by the processor, implements the following steps:
determining a first distance between the AIoT device and the base station according to the reflected signal;
sending the first distance to the core network device, the first distance being configured for determining the location of the AIoT device by the core network device.

In an embodiment, the computer program, when executed by the processor, also implements the following step:
sending resource configuration information for sending the excitation signal and the first identifier to at least one neighboring base station;
where the neighboring base station receives the reflected signal based on the resource configuration information and the first identifier.

In an embodiment, the computer program, when executed by the processor, implements the following steps:
determining a first distance between the AIoT device and the base station according to the reflected signal;
receiving a second distance between each neighboring base station and the AIoT device sent by each neighboring base station, the second distance being determined by the neighboring base station according to the reflected signal; and
determining the location of the AIoT device according to the first distance and the second distances.

In an embodiment, the computer program, when executed by the processor, also implements the following steps:
receiving a positioning process ending indication sent by the core network device; and
sending a sleep instruction to the AIoT device according to the positioning process ending indication.

In an embodiment, there is provided a computer-readable storage medium having a computer program stored thereon, the computer program, when executed by a processor, implementing the following step:
sending a positioning service request to a base station;
where the positioning service request carries a first identifier.

In an embodiment, the computer program, when executed by the processor, also implements the following step:
determining a base station storing the first identifier according to the first identifier.

In an embodiment, the computer program, when executed by the processor, also implements the following steps:
receiving a first distance between an AIoT device and the base station sent by the base station as well as the positioning service request; and
determining a location of the AIoT device according to the first distance and the positioning service request.

In an embodiment, the computer program, when executed by the processor, also implements the following steps:
receiving resource configuration information configured for sending an excitation signal and the first identifier sent by the base station; and
forwarding the resource configuration information and the first identifier to at least one neighboring base station corresponding to the base station;
where the neighboring base station receives a reflected signal based on the resource configuration information and the first identifier, so as to determine the location of the AIoT device.

In an embodiment, the computer program, when executed by the processor, also implements the following step:
receiving the positioning service request sent by a client;
after sending the positioning service request to the base station, the method further includes:
sending the location of the AIoT device to the client.

In an embodiment, there is provided a computer program product including a computer program which, when executed by a processor, implements the following steps:
receiving an excitation signal sent by a base station; and
sending a reflected signal to the base station based on the excitation signal, , the reflected signal being configured for determining a location of the AIoT device.

In an embodiment, the computer program, when executed by the processor, implements the following steps:
receiving a wake-up signal sent by the base station, the wake-up signal being configured for waking up the AIoT device; and
receiving, under the condition of accessing the base station, a positioning signal sent by the base station for indicating positioning.

In an embodiment, the computer program, when executed by the processor, also implements the following step:
after the wake-up signal is received, controlling the AIoT device to be in an active state according to the wake-up signal.

In an embodiment, the computer program, when executed by the processor, implements the following step:
under the condition that the first identifier indicates the AIoT device and/or the first identifier indicates an AIoT device group to which the AIoT device belongs, sending the reflected signal to the base station according to the excitation signal.

In an embodiment, the computer program, when executed by the processor, also implements the following steps:
receiving a sleep instruction sent by the base station; and
controlling the AIoT device to get into a sleep state according to the sleep instruction.

In an embodiment, the computer program, when executed by the processor, implements the following step:
receiving the excitation signal sent by the base station in a broadcast manner or in a point-to-point manner.

In an embodiment, there is provided a computer program product including a computer program which, when executed by a processor, implements the following steps:
sending an excitation signal;
receiving a reflected signal reflected by an AIoT device; and
determining a location of the AIoT device according to the reflected signal.

In an embodiment, the excitation signal carries a first identifier, and the first identifier is configured to instruct the AIoT device indicated by the first identifier and/or at least one AIoT device in a AIoT device group indicated by the first identifier to reflect the reflected signal.

In an embodiment, the computer program, when executed by the processor, implements the following steps:
determining whether the AIoT device sending the reflected signal is a AIoT device needing positioning according to an identifier carried by the reflected signal; and
in a case that the AIoT device sending the reflected signal is the AIoT device needing positioning, determining the location of the AIoT device according to the reflected signal.

In an embodiment, the computer program, when executed by the processor, implements the following step:
under the condition that the identifier carried by the reflected signal and the first identifier indicate the same AIoT device and/or the same AIoT device group, determining that the AIoT device sending the reflected signal is the AIoT device needing positioning.

In an embodiment, the computer program, when executed by the processor, also implements the following step:
receiving a positioning service request sent by a core network device, the positioning service request carrying the first identifier.

In an embodiment, the computer program, when executed by the processor, implements the following steps:
determining a first distance between the AIoT device and the base station according to the reflected signal;
sending the first distance to the core network device, the first distance being configured for determining the location of the AIoT device by the core network device.

In an embodiment, the computer program, when executed by the processor, also implements the following step:
sending resource configuration information for sending the excitation signal and the first identifier to at least one neighboring base station;
where the neighboring base station receives the reflected signal based on the resource configuration information and the first identifier.

In an embodiment, the computer program, when executed by the processor, implements the following steps:
determining a first distance between the AIoT device and the base station according to the reflected signal;
receiving a second distance between each neighboring base station and the AIoT device sent by each neighboring base station, the second distance being determined by the neighboring base station according to the reflected signal; and
determining the location of the AIoT device according to the first distance and the second distances.

In an embodiment, the computer program, when executed by the processor, also implements the following steps:
receiving a positioning process ending indication sent by the core network device; and
sending a sleep instruction to the AIoT device according to the positioning process ending indication.

In an embodiment, there is provided a computer program product including a computer program which, when executed by a processor, implements the following step:
sending a positioning service request to a base station;
where the positioning service request carries a first identifier.

In an embodiment, the computer program, when executed by the processor, also implements the following step:
determining a base station storing the first identifier according to the first identifier.

In an embodiment, the computer program, when executed by the processor, also implements the following steps:
receiving a first distance between an AIoT device and the base station sent by the base station as well as the positioning service request; and
determining a location of the AIoT device according to the first distance and the positioning service request.

In an embodiment, the computer program, when executed by the processor, also implements the following steps:
receiving resource configuration information configured for sending an excitation signal and the first identifier sent by the base station; and
forwarding the resource configuration information and the first identifier to at least one neighboring base station corresponding to the base station;
where the neighboring base station receives a reflected signal based on the resource configuration information and the first identifier, so as to determine the location of the AIoT device.

In an embodiment, the computer program, when executed by the processor, also implements the following step:
receiving the positioning service request sent by a client;
after sending the positioning service request to the base station, the method further includes:
sending the location of the AIoT device to the client.

FIG. 16 is a schematic structural diagram of a chip according to an embodiment of the present application. The chip 1600 shown in FIG. 16 includes a processor 1610, and the processor 1610 can call a computer program from a memory and run the program to implement the method according to the embodiment of the present application.

In some embodiments, as shown in FIG. 16, the chip 1600 may further include the memory 1620. The processor 1610 can call the computer program from the memory 1620 and run the program to implement the method according to the embodiment of the present application.

The memory 1620 may be a separate device from the processor 1610, or may be integrated in the processor 1610.

In some embodiments, the chip 1600 may further include an input interface 1630. The processor 1610 may control the input interface 1630 to communicate with other devices or chips, and may obtain information or data sent by the other devices or chips.

In some embodiments, the chip 1600 may further include an output interface 1640. The processor 1610 may control the output interface 1640 to communicate with other devices or chips, and may output information or data to the other devices or chips.

In some embodiments, the chip 1600 may be applied to an AIoT device, a base station or a core network device in the embodiment of the present application, and the chip 1600 may implement corresponding processes implemented in each method according to the embodiment of the present application, which are not repeated herein for brevity.

It should be understood that the chip 1600 according to the embodiment of the present application may also be referred to as a system-on-chip, or the like.

It will be understood by those skilled in the art that all or part of the processes of the method according to the embodiments described above may be implemented by a computer program instructing related hardware, and the computer program may be stored in a non-transitory computer-readable storage medium, and when executed, may include the processes of the embodiments of the method described above. Any reference to memories, storage, databases or other media used in the embodiments of the present application can include at least one of a non-transitory memory and a transitory memory. The non-transitory memory may include a Read-Only Memory (ROM), magnetic tape, a floppy disk, a flash memory, an optical memory, or the like. The transitory memory can include a Random Access Memory (RAM) or an external cache memory. By way of illustration and not limitation, the RAM can take many forms such as a Static Random Access Memory (SRAM) and a Dynamic Random Access Memory (DRAM).

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

Finally, it should be noted that the above embodiments are only used to illustrate the technical solutions of the present application, not to limit the present application; although the present application is described in detail with reference to the above embodiments, those having ordinary skill in the art should understand that they still can modify technical solutions recited in the aforesaid embodiments or equivalently replace partial or all technical features therein; these modifications or substitutions do not make essence of corresponding technical solutions depart from the scope of technical solutions of embodiments of the present application, and all of them should be included in the scope of the claims and description of the present application. Particularly, as long as structural conflicts do not exist, all technical features mentioned in all the embodiments may be combined together in any mode. The present application is not limited to the specific embodiments disclosed in the description, but includes all technical solutions falling into the scope of the claims.

## Claims

1. A positioning method applied in an ambient Internet of Things device, comprising:
receiving an excitation signal sent by a base station; and
sending a reflected signal to the base station based on the excitation signal, the reflected signal being configured for determining a location of the ambient Internet of Things device.

2. The method according to claim 1, wherein receiving the excitation signal sent by the base station comprises:
receiving a wake-up signal sent by the base station, the wake-up signal being configured for waking up the ambient Internet of Things device; and
receiving, in a case that the ambient Internet of Things device accesses the base station, a positioning signal sent by the base station for indicating positioning.

3. The method according to claim 2, further comprising:
after the wake-up signal is received, controlling the ambient Internet of Things device to be in an active state according to the wake-up signal.

4. The method according to claim 1, wherein the excitation signal carries a first identifier, and sending the reflected signal to the base station based on the excitation signal comprises:
in a case that the first identifier indicates the ambient Internet of Things device and/or the first identifier indicates an ambient Internet of Things device group to which the ambient Internet of Things device belongs, sending the reflected signal to the base station according to the excitation signal.

5. The method according to any one of claims 1 to 4, further comprising:
receiving a sleep instruction sent by the base station; and
controlling the ambient Internet of Things device to get into a sleep state according to the sleep instruction.

6. The method according to any one of claims 1 to 4, wherein receiving the excitation signal sent by the base station comprises:
receiving the excitation signal sent by the base station in a broadcast manner or in a point-to-point manner.

7. A positioning method applied in a base station, comprising:
sending an excitation signal;
receiving a reflected signal reflected by an ambient Internet of Things device; and
determining a location of the ambient Internet of Things device according to the reflected signal.

8. The method according to claim 7, wherein the excitation signal carries a first identifier, and the first identifier is configured to instruct the ambient Internet of Things device indicated by the first identifier and/or at least one ambient Internet of Things device in an ambient Internet of Things device group indicated by the first identifier to reflect the reflected signal.

9. The method according to claim 8, wherein determining the location of the ambient Internet of Things device according to the reflected signal comprises:
determining whether the ambient Internet of Things device sending the reflected signal is an ambient Internet of Things device needing positioning according to an identifier carried by the reflected signal; and
in a case that the ambient Internet of Things device sending the reflected signal is the ambient Internet of Things device needing positioning, determining the location of the ambient Internet of Things device according to the reflected signal.

10. The method according to claim 9, wherein determining whether the ambient Internet of Things device sending the reflected signal is the ambient Internet of Things device needing positioning comprises:
in a case that the identifier carried by the reflected signal and the first identifier indicate the same ambient Internet of Things device and/or the same ambient Internet of Things device group, determining that the ambient Internet of Things device sending the reflected signal is the ambient Internet of Things device needing positioning.

11. The method according to any one of claims 8 to 10, wherein before sending the excitation signal, the method further comprises:
receiving a positioning service request sent by a core network device, the positioning service request carrying the first identifier.

12. The method according to claim 11, wherein determining the location of the ambient Internet of Things device according to the reflected signal comprises:
determining a first distance between the ambient Internet of Things device and the base station according to the reflected signal; and
sending the first distance to the core network device, the first distance being configured for the core network device to determine the location of the ambient Internet of Things device.

13. The method according to claim 11, further comprising:
sending resource configuration information for sending the excitation signal and the first identifier to at least one neighboring base station;
wherein the neighboring base station receives the reflected signal based on the resource configuration information and the first identifier.

14. The method according to claim 13, wherein determining the location of the ambient Internet of Things device according to the reflected signal comprises:
determining a first distance between the ambient Internet of Things device and the base station according to the reflected signal;
receiving a second distance between each neighboring base station and the ambient Internet of Things device sent by each neighboring base station, the second distance being determined by the neighboring base station according to the reflected signal; and
determining the location of the ambient Internet of Things device according to the first distance and the second distances.

15. The method according to claim 7, further comprising:
receiving a positioning process ending indication sent by the core network device; and
sending a sleep instruction to the ambient Internet of Things device according to the positioning process ending indication.

16. A positioning apparatus applied in an ambient Internet of Things device, comprising:
a receiving module configured to receive an excitation signal sent by a base station; and
a sending module configured to send a reflected signal to the base station based on the excitation signal, the reflected signal being configured for determining a location of the ambient Internet of Things device.

17. A positioning apparatus applied in a base station, comprising:
a sending module configured to send an excitation signal;
a receiving module configured to receive a reflected signal reflected by an ambient Internet of Things device; and
a processing module configured to determine a location of the ambient Internet of Things device according to the reflected signal.

18. An ambient Internet of Things device, comprising a memory, a transceiver, and a processor:
the memory is configured for storing a computer program; the transceiver is configured for transmitting and receiving data under control of the processor; and the processor is configured for reading the computer program in the memory and performing the following operations:
controlling the transceiver to receive an excitation signal sent by a base station; and
controlling the transceiver to send a reflected signal to the base station based on the excitation signal, the reflected signal being configured for determining a location of the ambient Internet of Things device.

19. The ambient Internet of Things device according to claim 18, wherein receiving the excitation signal sent by the base station by the processor comprises:
receiving a wake-up signal sent by the base station, the wake-up signal being configured for waking up the ambient Internet of Things device; and
receiving, in a case that the ambient Internet of Things device accesses the base station, a positioning signal sent by the base station for indicating positioning.

20. The ambient Internet of Things device according to claim 19, wherein the processor further performs the following operation:
after the wake-up signal is received, controlling the ambient Internet of Things device to be in an active state according to the wake-up signal.

21. The ambient Internet of Things device according to claim 18, wherein the excitation signal carries a first identifier;
sending the reflected signal to the base station by the processor based on the excitation signal comprises:
in a case that the first identifier indicates the ambient Internet of Things device and/or the first identifier indicates an ambient Internet of Things device group to which the ambient Internet of Things device belongs, sending the reflected signal to the base station according to the excitation signal.

22. The ambient Internet of Things device according to any one of claims 18 to 21, wherein the processor further performs the following operations:
receiving a sleep instruction sent by the base station; and
controlling the ambient Internet of Things device to get into a sleep state according to the sleep instruction.

23. The ambient Internet of Things device according to any one of claims 1-4, wherein receiving the excitation signal sent by the base station by the processor comprises:
receiving the excitation signal sent by the base station in a broadcast manner or in a point-to-point manner.

24. A base station, comprising a memory, a transceiver, and a processor:
the memory is configured for storing a computer program; the transceiver is configured for transmitting and receiving data under control of the processor; and the processor is configured for reading the computer program in the memory and performing the following operations:
controlling the transceiver to send an excitation signal;
controlling the transceiver to receive a reflected signal reflected by an ambient Internet of Things device; and
determining a location of the ambient Internet of Things device according to the reflected signal.

25. A computer-readable storage medium having a computer program stored thereon, the computer program, when executed by a processor, implementing the steps of the method according to any one of claims 1 to 15.
